# EUROPEAN PATENT SPECIFICATION

(11) **EP 3 641 222 B1**
(45) Date of publication and mention of the grant of the patent: **05.01.2022**
(21) Application number: 17911049.9
(22) Date of filing: 17.11.2017
(51) Int. Cl.: H04L 12/26

(54) **METHOD, APPARATUS AND SYSTEM FOR MONITORING DATA TRAFFIC**
VERFAHREN, VORRICHTUNG UND SYSTEM ZUR ÜBERWACHUNG VON DATENVERKEHR
PROCÉDÉ, APPAREIL ET SYSTÈME DE SURVEILLANCE DE TRAFIC DE DONNÉES

(30) Priority: 23.05.2017 CN 201710370615
(43) Date of publication of application: 22.04.2020
(73) Proprietor: Huawei Technologies Co., Ltd., Longgang District Shenzhen, Guangdong 518129 (CN)
(72) Inventor: GU, Mingwei, Shenzhen Guangdong 518129 (CN); MA, Zhiyong, Shenzhen Guangdong 518129 (CN)
(74) Representative: Maiwald Patent- und Rechtsanwaltsgesellschaft mbH
(86) International application number: PCT/CN2017/111606
(87) International publication number: WO 2018/214424

(56) References cited:
- EP-A1- 2 755 421
- EP-A2- 1 811 742
- WO-A1-2011/060377
- CN-A- 101 287 010
- CN-A- 101 431 424
- CN-A- 103 906 136
- CN-A- 105 099 821
- US-B1- 7 433 943

## Description

### TECHNICAL FIELD

This application relates to the field of communications technologies, and in particular, to a method, an apparatus, and a system for monitoring data traffic. More specifically, this application relates to monitoring and processing of error identification of data traffic associated with a to-be-monitored protocol type.

### BACKGROUND

In recent years, with increasing popularity of an Internet Protocol (English: Internet Protocol, IP for short) network, data services of the IP network exponentially develop with maturity of various applications. User equipment accesses a server on the other side of the IP network by using a wireless access device or a wired access device provided by a communications operator, to obtain a corresponding service. Based on conventional web browsing and service downloading, wide popularization of applications such as a point-to-point (English: Point-to-Point, P2P for short) service, an online game, and a Voice over Internet Protocol brings a large quantity of users to the communications operator, and also brings a great challenge. For example, an application based on a P2P service usually "greedily" occupies network resources, and occupies a large amount of Internet traffic. Consequently, network congestion with different extents is caused, and user experience of another application is significantly degraded.

EP 2 755 421 A1 describes a technique which makes it possible to indirectly urge a major connection destination of data communication by mobile phones to pay a facility usage fee to the carrier.

CN103906136A describes data service traffic managing and controlling method and device.

Introducing a service awareness (English: Service Awareness, SA for short) technology into a device can resolve this problem. The SA is a technology of analyzing an IP packet to determine a protocol type of the IP packet and an application. Functions of service security, content charging, and service control are implemented by deploying an SA device between a user and the IP network.

In an application scenario, the SA device has an accurate identification capability and an in-depth information extraction capability for data traffic. However, due to a reason such as a release update of application software or abnormal traffic, an identification error of the SA device occurs in data traffic associated with a protocol type, and as a result, data traffic management and control behavior fails or a data traffic charging error occurs, a profit loss of the communications operator is caused, and user experience of Internet surfing is degraded.

### SUMMARY

The invention is defined by the subject-matter of the appended claims.

### BRIEF DESCRIPTION OF DRAWINGS

FIG. 1 is a schematic structural diagram of a network according to an embodiment of this application;
FIG. 2 is a flowchart of a method for monitoring data traffic according to an embodiment of this application;
FIG. 3 is a schematic structural diagram of a monitoring apparatus according to an embodiment of this application; and
FIG. 4 is a schematic structural diagram of hardware of a monitoring apparatus according to an embodiment of this application.

### DESCRIPTION OF EMBODIMENTS

Embodiments of this application provide a method, an apparatus, and a system for monitoring data traffic, applied to an application scenario in which user equipment accesses an IP network by using a device provided by a communications operator. The monitoring apparatus monitors an identification error in data traffic associated with a to-be-monitored protocol type, and triggers a corresponding identification error protection action, to reduce a profit loss of a communications operator and improve user experience of Internet surfing.

The following separately provides detailed descriptions by using specific embodiments.

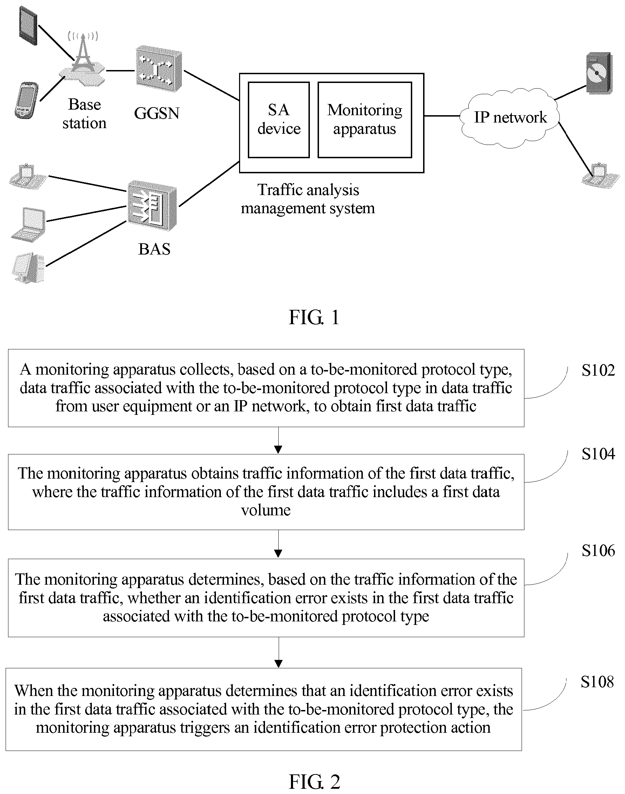

FIG. 1 is a schematic structural diagram of a network according to an embodiment of this application. In the network shown in FIG. 1, a user may access network resources on the other side of an IP network by using user equipment over the IP network. The network resources may provide services such as web browsing, data downloading, and data uploading. The user may also perform communication such as video communication, voice communication, and instant message communication with a user on the other side of the IP network by using the user equipment over the IP network. Specifically, the user equipment may communicate with the IP network over a wireless network or a wired broadband network. In a scenario in which the user equipment communicates with the IP network over the wireless network, the network structure further includes a base station and a gateway GPRS support node (English: Gateway GPRS Support Node, GGSN for short), and a GPRS is a general packet radio service (English: General Packet Radio Service). The user equipment may communicate with the IP network by using the base station and the GGSN. In a scenario in which the user equipment communicates with the IP network over the wired broadband network, the network structure further includes a broadband access server (English: Broadband Access Server, BAS for short). The user equipment may communicate with the IP network by using the BAS. The GGSN and the BAS may be routers. The user equipment may be at least one of the following devices: a smartphone, a personal digital assistant (English: Personal Digital Assistant, PDA for short), a Voice over Internet Protocol (English: Voice over Internet Protocol, VoIP for short) network device, a portable computer, a desktop computer, and the like.

As shown in FIG. 1, the network structure further includes a traffic analysis management system. The traffic analysis management system is deployed on a communication link between the GGSN and the IP network, or the traffic analysis management system is deployed on a communication link between the BAS and the IP network, or the GGSN and the BAS device communicate with the IP network by using a same traffic analysis management system. The traffic analysis management system analyzes data traffic from the user equipment to the IP network or data traffic from the IP network to the user equipment, and manages, based on an analysis result, the data traffic from the user equipment to the IP network or the data traffic from the IP network to the user equipment. The traffic analysis management system may include an SA device and a monitoring apparatus.

In an application scenario, the SA device has an accurate identification capability and an in-depth information extraction capability for data traffic. The SA device obtains a protocol type in the data traffic, and compares the obtained protocol type in the data traffic with a protocol type stored in the SA device, to identify a protocol type to which the obtained protocol type in the data traffic belongs. However, due to a reason such as a release update of application software or abnormal traffic, an identification error of the SA device may occur in data traffic associated with a protocol type. For example, a release of the application software has been updated, but a feature of the protocol type stored in the SA device is not updated in a timely manner, and consequently when the SA device identifies data traffic that is sent by the application software whose release is updated, the SA device identifies a protocol type in the data traffic as an unknown protocol type or another protocol type. For another example, data traffic sent by the user equipment is abnormal traffic, and consequently the SA device identifies a protocol type in the data traffic as an unknown protocol type or another protocol type. Such an identification error is to result in a failure of data traffic management and control behavior or a data traffic charging error.

The monitoring apparatus provided in the embodiments of this application can monitor the foregoing identification error, and trigger an identification error protection action based on the identification error. The monitoring apparatus collects, based on a to-be-monitored protocol type, data traffic associated with the to-be-monitored protocol type in data traffic from user equipment or an IP network, to obtain first data traffic. The monitoring apparatus obtains traffic information of the first data traffic, where the traffic information of the first data traffic includes a first data volume, and the first data volume is used to indicate a sum of lengths of all packets in the first data traffic. The monitoring apparatus determines, based on the traffic information of the first data traffic, whether an identification error exists in the first data traffic associated with the to-be-monitored protocol type. When the monitoring apparatus determines that an identification error exists in the first data traffic associated with the to-be-monitored protocol type, the monitoring apparatus triggers an identification error protection action. In a possible implementation, all functions of the monitoring apparatus are integrated into the SA device. In another possible implementation, some functions of the monitoring apparatus are integrated into the SA device, in other words, the following functions implemented by the monitoring apparatus are integrated into the SA device for implementation: collecting, based on the to-be-monitored protocol type, the data traffic associated with the to-be-monitored protocol type in the data traffic from the user equipment or the IP network, to obtain the first data traffic; and obtaining, by the monitoring apparatus, the traffic information of the first data traffic, where the traffic information of the first data traffic includes the first data volume, and the first data volume is used to indicate the sum of the lengths of all the packets in the first data traffic. In still another possible implementation, the monitoring apparatus is implemented by a hardware apparatus independent of the SA device. For a specific implementation and a deployment manner of the monitoring apparatus, refer to subsequent explanations and descriptions in the embodiments of this application.

It should be understood that the network structure shown in FIG. 1 illustrates an example of an application scenario of the monitoring apparatus in this application. The monitoring apparatus may be applied to various application scenarios in which data traffic needs to be analyzed and managed. For example, the monitoring apparatus is applied to an intra-enterprise local area network, to analyze and manage intra-enterprise data traffic. For another example, the monitoring apparatus is applied to a scenario in which data traffic is exchanged between carriers, to analyze and manage traffic exchange between the carriers.

In the foregoing implementation, the monitoring apparatus collects, based on the to-be-monitored protocol type, the data traffic associated with the to-be-monitored protocol type in the data traffic from the user equipment or the IP network, to obtain the first data traffic. The monitoring apparatus obtains the traffic information of the first data traffic. In addition, the monitoring apparatus determines, based on the traffic information of the first data traffic, whether an identification error exists in the first data traffic associated with the to-be-monitored protocol type. When the monitoring apparatus determines that an identification error exists in the first data traffic associated with the to-be-monitored protocol type, the monitoring apparatus triggers the identification error protection action. In this way, the monitoring apparatus monitors an identification error in data traffic associated with a to-be-monitored protocol type, and triggers a corresponding identification error protection action, to reduce a profit loss of a communications operator and improve user experience of Internet surfing.

FIG. 2 is a flowchart of a method for monitoring data traffic according to an embodiment of this application. The method shown in FIG. 2 may be applied to the network structure shown in FIG. 1. As shown in FIG. 2, the method includes the following steps.

S102. A monitoring apparatus collects, based on a to-be-monitored protocol type, data traffic associated with the to-be-monitored protocol type in data traffic from user equipment or an IP network, to obtain first data traffic.

According to FIG. 1, the user equipment may send data traffic to the IP network, and the user equipment may also receive data traffic from the IP network. In this embodiment, an example in which the user equipment sends the data traffic to the IP network is used for description.

The monitoring apparatus receives the data traffic from the user equipment, and there may be one or more user equipments. One user may be corresponding to one user equipment, or one user may be corresponding to a plurality of user equipments. For example, two user equipments communicate with the IP network by sharing one user account. The monitoring apparatus may include a feature library, the feature library stores a to-be-monitored protocol type and a corresponding identification feature, and the identification feature includes an identification feature of a protocol type used by application software. The to-be-monitored protocol type is a protocol type that needs to be monitored by the monitoring apparatus. Table 1 shows 17 categories of commonly-used protocol types below. Optionally, each category of protocol type may further include several subcategories of protocol types, so that the monitoring apparatus can monitor a subcategory of protocol type at a finer granularity. For example, data traffic associated with a P2P protocol and data traffic associated with a video protocol need to be collected based on a service requirement, that is, to-be-monitored protocol types are the P2P protocol and the video protocol. The monitoring apparatus collects, based on the P2P protocol and the video protocol, the data traffic associated with the P2P protocol and the data traffic associated with the video protocol in the data traffic from the user equipment. Specifically, the monitoring apparatus analyzes an identification feature of the data traffic from the user equipment, and compares the identification feature with the identification feature in the feature library, to determine a corresponding protocol type and collect data traffic that belongs to the protocol type and that is in the data traffic from the user equipment. The feature library stores the identification feature of the protocol type of the application software corresponding to the to-be-monitored protocol type, and therefore the to-be-monitored protocol type is used to indicate an application associated with data traffic.

**Table 1**

| Protocol type | Description |
|---|---|
| P2P | Protocol for sharing a file between nodes in a point-to-point manner |
| VoIP | Protocol for performing voice data transmission on the Internet, including a voice chat protocol in an instant messaging tool |
| Instant messaging (instant messaging, IM) | Instant messaging software, including protocols for login, text chat, file transmission, and the like |
| Web_Browsing | Web browsing protocol |
| File_Access_Protocol | Protocol for transmitting a file on a network in a client-server manner |
| Video | Related protocol used in a chat room or a website mainly including a video |
| Stock | Protocol that provides real-time stock price information |
| Game | Protocol used in an online game |
| Email | Standard protocol for sending and receiving an email |
| Network_Administration | Protocol for managing a public network or a private network |
| Remote_Connectivity | Protocol for connecting to a remote computer |
| News_Groups | Usenet-based information exchange protocol |
| Network_Storage | Website that provides an online backup service and a storage service |
| Mobile | Related protocol used in a mobile network |
| Webmail | Website that provides an email service |
| Steaming | Protocol for transmitting files of various streaming media formats, applied to a host-based (for example, B/S or C/S) website such as broadcasting, music, or television in the Internet |
| PeerCasting | Protocol for watching an online video in a point-to-point manner |

For the feature library of the monitoring apparatus, the to-be-monitored protocol type and the corresponding identification feature stored in the feature library may be set in a static configuration manner, or the monitoring apparatus may request an SA device to deliver the to-be-monitored protocol type and the corresponding identification feature stored in the feature library. In addition, in a scenario in which all functions of the monitoring apparatus are integrated into the SA device and in a scenario in which some functions of the monitoring apparatus are integrated into the SA device, step S102 may be implemented by the SA device, and the monitoring apparatus may directly invoke a feature library of the SA device.

In a process of obtaining the first data traffic through collection, the monitoring apparatus may collect data traffic at a moment to obtain the first data traffic, for example, collect data traffic at 10: 00 a.m. (a.m. represents ante meridiem); or may collect data traffic in a time interval to obtain the first data traffic, for example, collect data traffic in 10: 00 a.m. to 10: 05 a.m. The monitoring apparatus may further periodically collect data traffic, for example, collect data traffic at 10: 00 a.m. on March 1, 2016, data traffic at 10: 00 a.m. on March 2, 2016, and data traffic at 10: 00 a.m. on March 3, 2016.

S104. The monitoring apparatus obtains traffic information of the first data traffic, where the traffic information of the first data traffic includes a first data volume.

In S102, the monitoring apparatus obtains the first data traffic during the collection process, and the first data traffic is the data traffic associated with the to-be-monitored protocol type in the data traffic from the user equipment or the IP network. For example, the data traffic from the user equipment includes P2P data traffic, VOIP data traffic, and video data traffic, and the to-be-monitored protocol type is the video protocol. Therefore, the first data traffic that is obtained by the monitoring apparatus during the collection process includes the video data traffic.

The monitoring apparatus obtains the traffic information of the first data traffic. The traffic information of the first data traffic includes the first data volume, and the first data volume is used to indicate a sum of lengths of all packets in the first data traffic. The traffic information of the first data traffic further includes a first user quantity, and the first user quantity is used to indicate a quantity of users associated with the first data traffic. For the data traffic sent by the user equipment, the monitoring apparatus may determine the first user quantity by collecting statistics about a quantity of source IP addresses associated with the first data traffic. For the data traffic received by the user equipment from the IP network, the monitoring apparatus may determine the first user quantity by collecting statistics about a quantity of destination IP addresses associated with the first data traffic. For the data traffic in the foregoing two directions, the monitoring apparatus may alternatively determine the first user quantity by collecting statistics about a quantity of user accounts associated with the first data traffic. For the data traffic in the foregoing two directions, the monitoring apparatus may alternatively determine the first user quantity based on some or all of quintuple information, and the quintuple information includes a source IP address, a destination IP address, a source port number, a destination port number, and a protocol number. For example, the monitoring apparatus may determine the first user quantity by collecting statistics about a quantity of information groups including source IP addresses and destination IP addresses associated with the first data traffic, and a connection is determined based on a pair of source IP address and destination IP address. For another example, the monitoring apparatus may determine the first user quantity by collecting statistics about a quantity of information groups including source IP addresses, destination IP addresses, source port numbers, and destination port numbers associated with the first data traffic. For still another example, the monitoring apparatus may determine the first user quantity by collecting statistics about a quantity of quintuples associated with the first data traffic.

S106. The monitoring apparatus determines, based on the traffic information of the first data traffic, whether an identification error exists in the first data traffic associated with the to-be-monitored protocol type.

The monitoring apparatus may determine, based on the first data volume of the first data traffic, whether an identification error exists in the first data traffic associated with the to-be-monitored protocol type. The monitoring apparatus may alternatively determine, based on the first data volume and the first user quantity of the first data traffic, whether an identification error exists in the first data traffic associated with the to-be-monitored protocol type. An example in which the traffic information includes the first data volume is used to describe an identification error. In a possible implementation, the identification error means that some data traffic in the data traffic associated with this protocol type is identified as data traffic associated with another protocol type. For example, in an implementation of monitoring P2P data traffic, P2P data traffic of 1 Gb (Gb: gigabit) needs to be identified. However, due to a reason such as a release update of application software or abnormal traffic, P2P data traffic of 0.2 Gb in the P2P data traffic of 1 Gb is identified as video data traffic. In this case, some data traffic in the P2P data traffic is identified as the video data traffic, and P2P data traffic of 0.8 Gb is actually identified. In another possible implementation, the identification error means that the data traffic associated with this protocol type includes data traffic associated with another protocol type. For example, in an implementation of monitoring P2P data traffic, P2P data traffic of 1 Gb needs to be identified. However, due to a reason such as a release update of application software or abnormal traffic, video data traffic of 0.5 Gb is identified as P2P data traffic. In this case, the P2P data traffic includes the video data traffic that is identified as the P2P data traffic, and P2P data traffic of 1.5 Gb is actually identified. Similarly, when the traffic information includes the first data volume and the first user quantity, a change status of the first user quantity may be monitored by using the foregoing data volume monitoring method, and whether an identification error exists is finally determined based on the first data volume, the first user quantity, a weight of the first data volume, and a weight of the first user quantity. In this way, an absolute value of a deviation rate of a value of the traffic information of the first data traffic relative to a first threshold is specifically a sum of a value obtained by multiplying an absolute value of a deviation rate of a value of the first data volume relative to a first data volume threshold by a first weight and a value obtained by multiplying an absolute value of a deviation rate of a value of the first user quantity relative to a first user quantity threshold by a second weight, the first threshold includes the first data volume threshold and the first user quantity threshold, and a sum of the first weight and the second weight is 1. In S106, whether an identification error exists in the data traffic associated with the to-be-monitored protocol type is determined by monitoring a change of a data volume in the traffic information or by monitoring changes of a data volume and a user quantity in the traffic information.

In S106, optionally, when the absolute value of the deviation rate of the value of the traffic information of the first data traffic relative to the first threshold is greater than a first predetermined deviation rate, the monitoring apparatus determines that an identification error exists in the first data traffic associated with the to-be-monitored protocol type, where the first threshold is a preset value.

An example in which the traffic information includes the first data volume is used for description. It is assumed that the monitoring apparatus finds, through monitoring, that a first data volume of first data traffic sent by the user equipment at 10: 00 a.m. on March 1, 2016 is 5 Gb, and the first data traffic is P2P data traffic. Based on historical experience, a data volume threshold of P2P data traffic is set to 4 Gb at 10: 00 a.m. every day, and therefore the first threshold is set to 4 Gb. The first predetermined deviation rate is set to 20%. A deviation rate of a value of traffic information of the first data traffic relative to the first threshold is: (first data traffic - first threshold)/first threshold × 100%, to be specific, (5 Gb - 4 Gb)/4 Gb × 100% = 25%. An absolute value of the deviation rate is greater than the first predetermined deviation rate (25%>20%). Therefore, it is determined that an identification error exists in the first data traffic associated with the to-be-monitored protocol type. Correspondingly, if the calculated deviation rate is less than or equal to the first predetermined deviation rate, it may be determined that no identification error exists in the first data traffic associated with the to-be-monitored protocol type.

An example in which the traffic information includes the first data volume and the first user quantity is used for description. It is assumed that the monitoring apparatus finds, through monitoring, that a first data volume of first data traffic sent by the user equipment at 10: 00 a.m. on March 1, 2016 is 5 Gb, a first user quantity is 1100, and the first data traffic is P2P data traffic. Based on historical experience, a data volume threshold of P2P data traffic is set to 4 Gb at 10: 00 a.m. every day, and a user quantity threshold is set to 1000, and therefore the first data volume threshold is set to 4 Gb, the first user quantity threshold is set to 1000, and the first threshold includes the first data volume threshold and the first user quantity threshold. The first predetermined deviation rate is set to 20%. A deviation rate of the first data volume and a deviation rate of the first user quantity are calculated: (first data volume - first data volume threshold)/first data volume threshold × 100%, to be specific, (5 Gb - 4 Gb)/4 Gb × 100% = 25%; and (first user quantity - first user quantity threshold)/first user quantity threshold × 100%, to be specific, (1100 - 1000)/1000 × 100% = 10%. An absolute value of each of the foregoing deviation rates is obtained. A deviation rate of a value of traffic information of the first data traffic relative to the first threshold is: 25% × 0.8 + 10% × 0.2 = 22%. A weight of the first data volume is 0.8, and a weight of the first user quantity is 0.2. The calculated deviation rate is greater than the first predetermined deviation rate (22%>20%). Therefore, it is determined that an identification error exists in the first data traffic associated with the to-be-monitored protocol type.

The monitoring apparatus may periodically monitor the first data traffic, to determine whether an identification error exists in the first data traffic in each period. For example, the monitoring apparatus monitors traffic information of first data traffic at 10: 00 a.m. every day. Whether an identification error exists in the daily first data traffic is determined by comparing an absolute value of a deviation rate obtained through calculation every day with the first predetermined deviation rate. For another example, the monitoring apparatus monitors traffic information of first data traffic corresponding to a time interval from 10: 00 a.m. to 10: 05 a.m. every day.

S108. When the monitoring apparatus determines that an identification error exists in the first data traffic associated with the to-be-monitored protocol type, the monitoring apparatus triggers an identification error protection action.

The identification error protection action includes at least one of the following actions: alarming, traffic allowing, traffic limiting, and traffic blocking. That the monitoring apparatus triggers an identification error protection action includes: generating, by the monitoring apparatus, alarming information, and sending the alarming information to a management device, so that a network administrator finds, in a timely manner, that an identification error exists in the first data traffic associated with the protocol type; and generating, by the monitoring apparatus, a traffic allowing command, a traffic limiting command, or a traffic blocking command, and sending the traffic allowing command, the traffic limiting command, or the traffic blocking command to the SA device, so that the SA device performs traffic allowing, traffic limiting, or traffic blocking. Optionally, the alarming information includes a protocol type of data traffic in which an identification error occurs. Further, optionally, the alarming information further includes traffic information of data traffic or a deviation rate of a value of traffic information of data traffic relative to a threshold. When the alarming information includes the deviation rate, the alarming information further includes a positive sign or a negative sign of the deviation rate. Optionally, the traffic allowing command, the traffic limiting command, and the traffic blocking command each include a protocol type of data traffic in which an identification error occurs.

For example, it is determined in S106 that the absolute value of the deviation rate of the value of the traffic information of the first data traffic relative to the first threshold is 25% and is greater than the first predetermined deviation rate 20%. The monitoring apparatus generates the alarming information, and sends the alarming information to the management device.

For example, it is assumed that the first data traffic is a directed video of a video website A, and a carrier needs to charge the directed video. In addition, it is assumed that a first threshold of the directed video is 4 Gb at 10: 00 a.m. every day. The monitoring apparatus finds, through monitoring, that the first data volume of the first data traffic at 10: 00 a.m. on March 1, 2016 is 1 Gb. After calculation, it is determined that the absolute value of the deviation rate of the value of the traffic information of the first data traffic relative to the first threshold is 75% and is greater than the first predetermined deviation rate 20%. The monitoring apparatus generates the alarming information, and sends the alarming information to the management device to notify the management device that the identification error may result in a charging error. Optionally, the monitoring apparatus sends the traffic blocking command to the SA device, to instruct the SA device to perform traffic blocking on the directed video.

For example, it is assumed that the first data traffic is VOIP data traffic, and a traffic limiting value of the SA device for the VOIP data traffic is 2 Gb. The monitoring apparatus finds, through monitoring, that the first data volume of the first data traffic at 10: 00 a.m. on March 1, 2016 is 5 Gb. Through a monitoring means similar to that in the foregoing example, the monitoring apparatus determines that an identification error exists in the first data traffic. A reason that the first data traffic suddenly increases may be because non-VOIP data traffic is identified as the VOIP data traffic. In this case, if the SA device still performs traffic limiting on the VOIP data traffic based on the traffic limiting value of 2 Gb, a traffic loss of real VOIP data traffic may be caused. Therefore, the monitoring apparatus sends the alarming information to the management device, and the monitoring apparatus further sends the traffic allowing command to the SA device, to instruct the SA device to perform traffic allowing on the first data traffic of 5Gb. Therefore, damage to service traffic that is caused due to a traffic limiting rule of the SA device is avoided, and impact on user experience of Internet surfing is further avoided. After the management device receives the alarming information and eliminates a fault, the SA device is to restore an original traffic limiting rule.

The foregoing implementation may be applied to the scenario in which all the functions of the monitoring apparatus are integrated into the SA device. S102 to S108 are implemented by the SA device. Specifically, the SA device may have a function of the monitoring apparatus in this application by modifying the SA device. The foregoing implementation may also be applied to the scenario in which some functions of the monitoring apparatus are integrated into the SA device. For example, the monitoring apparatus includes a monitoring module, an identification error analysis module, and an identification error protection module. The monitoring module is integrated into the SA device to implement S102 and S104. The identification error analysis module for implementing S106 and the identification error protection module for implementing S108 are completed by hardware independent of the SA device. The SA device and the hardware are connected through a communication link. The foregoing implementation may be further applied to a scenario of a hardware apparatus independent of the SA device, and the hardware apparatus completes S102 to S108.

In the foregoing implementation, the monitoring apparatus collects, based on the to-be-monitored protocol type, the data traffic associated with the to-be-monitored protocol type in the data traffic from the user equipment or the IP network, to obtain the first data traffic. The monitoring apparatus obtains the traffic information of the first data traffic. In addition, the monitoring apparatus determines, based on the traffic information of the first data traffic, whether an identification error exists in the first data traffic associated with the to-be-monitored protocol type. When the monitoring apparatus determines that an identification error exists in the first data traffic associated with the to-be-monitored protocol type, the monitoring apparatus triggers the identification error protection action. In this way, the monitoring apparatus monitors an identification error in data traffic associated with a to-be-monitored protocol type, and triggers a corresponding identification error protection action, to reduce a profit loss of a communications operator and improve user experience of Internet surfing.

Optionally, S102 includes: the monitoring apparatus collects, based on the to-be-monitored protocol type, data traffic that is associated with the to-be-monitored protocol type in the data traffic from the user equipment or the IP network and that is corresponding to a first predetermined moment, to obtain the first data traffic. The method for monitoring data traffic further includes: the monitoring apparatus collects, based on the to-be-monitored protocol type, data traffic that is associated with the to-be-monitored protocol type in the data traffic from the user equipment or the IP network and that is corresponding to a second predetermined moment, to obtain second data traffic, where the first predetermined moment and the second predetermined moment are a same moment at different dates; the monitoring apparatus obtains traffic information of the second data traffic, where the traffic information of the second data traffic includes a second data volume, and the second data volume is used to indicate a sum of lengths of all packets in the second data traffic; the monitoring apparatus determines, based on an absolute value of a deviation rate of a value of the traffic information of the second data traffic relative to a second threshold, whether an identification error exists in the second data traffic associated with the to-be-monitored protocol type, where the second threshold is the value of the traffic information of the first data traffic; when the absolute value of the deviation rate of the value of the traffic information of the second data traffic relative to the second threshold is greater than a second predetermined deviation rate, the monitoring apparatus determines that an identification error exists in the second data traffic associated with the to-be-monitored protocol type; and when the monitoring apparatus determines that an identification error exists in the second data traffic associated with the to-be-monitored protocol type, the monitoring apparatus triggers an identification error protection action.

With reference to the foregoing explanations and descriptions in this embodiment of this application, the monitoring apparatus may collect data traffic at a predetermined moment, and periodically collect data traffic at a same moment every day or every week or every month, for example, the first predetermined moment is 10: 00 a.m. on March 1, 2016, and the second predetermined moment is 10: 00 a.m. on March 2, 2016. For another example, the first predetermined moment is 10: 00 a.m. on Monday in a first week, and the second predetermined moment is 10: 00 a.m. on Monday in a second week.

The monitoring apparatus may complete, in the implementations of S102 to S108, monitoring of the first data traffic corresponding to the first predetermined moment. If the monitoring apparatus determines that no identification error exists in the first data traffic associated with the to-be-monitored protocol type, the monitoring apparatus determines the value of the traffic information of the first data traffic as the second threshold, so that the monitoring apparatus monitors the second data traffic at the second predetermined moment based on the second threshold. When the traffic information of the first data traffic includes the first data volume, the first data volume is determined as the second threshold. When the traffic information of the first data traffic includes the first data volume and the first user quantity, the first data volume is determined as a second data volume threshold, the first user quantity is determined as a second user quantity threshold, and the second threshold includes the second data volume threshold and the second user quantity threshold.

The monitoring apparatus may obtain, in the implementations of S102 and S104, the second data traffic at the second predetermined moment and the traffic information of the second data traffic. Further, the monitoring apparatus may determine the absolute value of the deviation rate of the value of the traffic information of the second data traffic relative to the second threshold in the implementation of S106, to determine whether an identification error exists in the second data traffic associated with the to-be-monitored protocol type. If the absolute value of the deviation rate of the value of the traffic information of the second data traffic relative to the second threshold is greater than the second predetermined deviation rate, the monitoring apparatus determines that an identification error exists in the second data traffic associated with the to-be-monitored protocol type. According to the foregoing descriptions, the second threshold is the value of the traffic information of the first data traffic. The second predetermined deviation rate may be the same as or different from the first predetermined deviation rate. When the monitoring apparatus determines that an identification error exists in the second data traffic associated with the to-be-monitored protocol type, the monitoring apparatus triggers the identification error protection action in the implementation of S108.

Further, optionally, when the absolute value of the deviation rate of the value of the traffic information of the second data traffic relative to the second threshold is less than or equal to the second predetermined deviation rate, the monitoring apparatus determines that no identification error exists in the second data traffic associated with the to-be-monitored protocol type; and when the monitoring apparatus determines that no identification error exists in the second data traffic associated with the to-be-monitored protocol type, the monitoring apparatus updates the second threshold to an average of the value of the traffic information of the second data traffic and the value of the traffic information of the first data traffic.

For example, it is assumed that the to-be-monitored protocol type is the P2P protocol, and the traffic information includes a data volume. In the implementations of S102 to S108, the first data volume of the first data traffic is 4.5 Gb, and the first predetermined moment is 10: 00 a.m. on March 1, 2016. Based on historical experience, the first threshold is set to 4 Gb. Both the first predetermined deviation rate and the second predetermined deviation rate are set to 20%. The deviation rate of the value of the traffic information of the first data traffic relative to the first threshold is: (4.5 Gb - 4 Gb)/4 Gb × 100% = 12.5%, and the absolute value of the deviation rate is less than the first predetermined deviation rate. Therefore, no identification error exists in the first data traffic. The monitoring apparatus determines the first data volume as the second threshold, to be specific, the second threshold is 4.5 Gb. The monitoring apparatus obtains the second data traffic for the to-be-monitored protocol type of the P2P protocol. Through monitoring by the monitoring apparatus, the second data volume of the second data traffic is 3.8 Gb, and the second predetermined moment is 10: 00 a.m. on March 2, 2016. Through calculation, the deviation rate of the value of the traffic information of the second data traffic relative to the second threshold is: (3.8 Gb - 4.5 Gb)/4.5 Gb × 100% = -15.6%, and the absolute value of the deviation rate is less than the second predetermined deviation rate. Therefore, no identification error exists in the second data traffic. The monitoring apparatus updates the second threshold to the average of the value of the traffic information of the second data traffic and the value of the traffic information of the first data traffic, to be specific, updates the second threshold to (4.5 Gb + 3.8 Gb)/2 = 4.15 Gb. The monitoring apparatus uses 4.15 Gb as a new second threshold to replace the original second threshold of 4.5 Gb. Further, the monitoring apparatus may monitor third data traffic at a third predetermined moment based on the second threshold of 4.15 Gb, and the third predetermined moment is 10: 00 a.m. on March 3, 2016. If no identification error exists in the third data traffic, the monitoring apparatus updates the second threshold by using the foregoing method.

Optionally, the traffic information of the first data traffic includes the first data volume and the first user quantity, and the traffic information of the second data traffic includes the second data volume and a second user quantity. The absolute value of the deviation rate of the value of the traffic information of the second data traffic relative to the second threshold is specifically a sum of a value obtained by multiplying an absolute value of a deviation rate of a value of the second data volume relative to a second data volume threshold by a first weight and a value obtained by multiplying an absolute value of a deviation rate of a value of the second user quantity relative to a second user quantity threshold by a second weight, the second threshold includes the second data volume threshold and the second user quantity threshold, the second data volume threshold is a value of the first data volume of the first data traffic, the second user quantity threshold is a value of the first user quantity of the first data traffic, and a sum of the first weight and the second weight is 1.

Further, optionally, that the monitoring apparatus updates the second threshold to an average of the value of the traffic information of the second data traffic and the value of the traffic information of the first data traffic specifically includes: the monitoring apparatus updates the second data volume threshold to an average of the value of the second data volume of the second data traffic and the value of the first data volume of the first data traffic, and the monitoring apparatus updates the second user quantity threshold to an average of the value of the second user quantity of the second data traffic and the value of the first user quantity of the first data traffic.

For example, it is assumed that the to-be-monitored protocol type is the P2P protocol, and the traffic information includes a data volume and a user quantity. In the implementations of S102 to S108, the first data volume of the first data traffic is 4.5 Gb, the first user quantity of the first data traffic is 1100, and the first predetermined moment is 10: 00 a.m. on March 1, 2016. Based on historical experience, the first data volume threshold is set to 4 Gb, and the first user quantity threshold is set to 1000. Both the first predetermined deviation rate and the second predetermined deviation rate are set to 20%. The deviation rate of the first data volume and the deviation rate of the first user quantity are calculated: (4.5 Gb - 4 Gb)/4 Gb × 100% = 12.5%, and (1100 - 1000)/1000 × 100% = 10%. An absolute value of each of the foregoing deviation rates is obtained. The deviation rate of the value of the traffic information of the first data traffic relative to the first threshold is: 12.5% × 0.8 + 10% × 0.2 = 12%, and the calculated deviation rate is less than the first predetermined deviation rate. Therefore, no identification error exists in the first data traffic. The monitoring apparatus determines the first data volume and the first user quantity as the second threshold, to be specific, the second data volume threshold is 4.5 Gb, and the second user quantity threshold is 1100. The monitoring apparatus obtains the second data traffic for the to-be-monitored protocol type of the P2P protocol. Through monitoring by the monitoring apparatus, the second data volume of the second data traffic is 3.8 Gb, the second user quantity is 980, and the second predetermined moment is 10: 00 a.m. on March 2, 2016. Through calculation, the deviation rate of the first data volume and the deviation rate of the first user quantity are: (3.8 Gb - 4.5 Gb)/4.5 Gb × 100% = -15.6%, and (980 - 1100)/1100 × 100% = -10.9%. An absolute value of each of the foregoing deviation rates is obtained. The deviation rate of the value of the traffic information of the second data traffic relative to the second threshold is: 15.6% × 0.8 + 10.9% × 0.2 = 14.7%, and the calculated deviation rate is less than the second predetermined deviation rate. Therefore, no identification error exists in the second data traffic. The monitoring apparatus updates the second threshold to the average of the value of the traffic information of the second data traffic and the value of the traffic information of the first data traffic, to be specific, updates the second threshold to (4.5 Gb + 3.8 Gb)/2 = 4.15 Gb (second data volume threshold) and (1100 + 980)/2 = 1040 (second user quantity threshold). The monitoring apparatus uses 4.15 Gb as a new second data volume threshold to replace the original second data volume threshold of 4.5 Gb, and uses 1040 as a new second user quantity threshold to replace the original second user quantity threshold of 1100. Further, the monitoring apparatus may monitor third data traffic at a third predetermined moment based on the second data volume threshold of 4.15 Gb and the second user quantity threshold of 1040, and the third predetermined moment is 10: 00 a.m. on March 3, 2016. If no identification error exists in the third data traffic, the monitoring apparatus updates the second threshold by using the foregoing method.

Optionally, S102 includes: the monitoring apparatus collects, based on the to-be-monitored protocol type, data traffic that is associated with the to-be-monitored protocol type in the data traffic from the user equipment or the IP network and that is corresponding to a first predetermined time interval, to obtain the first data traffic. The method for monitoring data traffic further includes: the monitoring apparatus collects, based on the to-be-monitored protocol type, data traffic that is associated with the to-be-monitored protocol type in the data traffic from the user equipment or the IP network and that is corresponding to a second predetermined time interval, to obtain second data traffic, where a start moment of the first predetermined time interval and a start moment of the second predetermined time interval are a same moment at different dates, and an end moment of the first predetermined time interval and an end moment of the second predetermined time interval are a same moment at different dates; the monitoring apparatus obtains traffic information of the second data traffic, where the traffic information of the second data traffic includes a second data volume, and the second data volume is used to indicate a sum of lengths of all packets in the second data traffic; the monitoring apparatus determines, based on an absolute value of a deviation rate of a value of the traffic information of the second data traffic relative to a second threshold, whether an identification error exists in the second data traffic associated with the to-be-monitored protocol type, where the second threshold is the value of the traffic information of the first data traffic; when the absolute value of the deviation rate of the value of the traffic information of the second data traffic relative to the second threshold is greater than a second predetermined deviation rate, the monitoring apparatus determines that an identification error exists in the second data traffic associated with the to-be-monitored protocol type; and when the monitoring apparatus determines that an identification error exists in the second data traffic associated with the to-be-monitored protocol type, the monitoring apparatus triggers an identification error protection action.

With reference to the foregoing explanations and descriptions in this embodiment of this application, the monitoring apparatus may collect data traffic in a predetermined time interval, and periodically collect data traffic in a same time interval every day or every week or every month, for example, the first predetermined time interval is 10: 00 a.m. to 10: 05 a.m. on March 1, 2016, and the second predetermined time interval is 10: 00 a.m. to 10: 05 a.m. on March 2, 2016. For another example, the first predetermined time interval is 10: 00 a.m. to 10: 05 a.m. on Monday in a first week, and the second predetermined time interval is 10: 00 a.m. to 10: 05 a.m. on Monday in a second week. A difference between the implementation in this embodiment and the implementation in the foregoing embodiment lies in that collecting data traffic at a predetermined moment is replaced with collecting data traffic in a predetermined time interval. For a specific implementation in which the monitoring apparatus monitors the data traffic of the to-be-monitored protocol type, refer to the foregoing embodiment. Details are not described herein again.

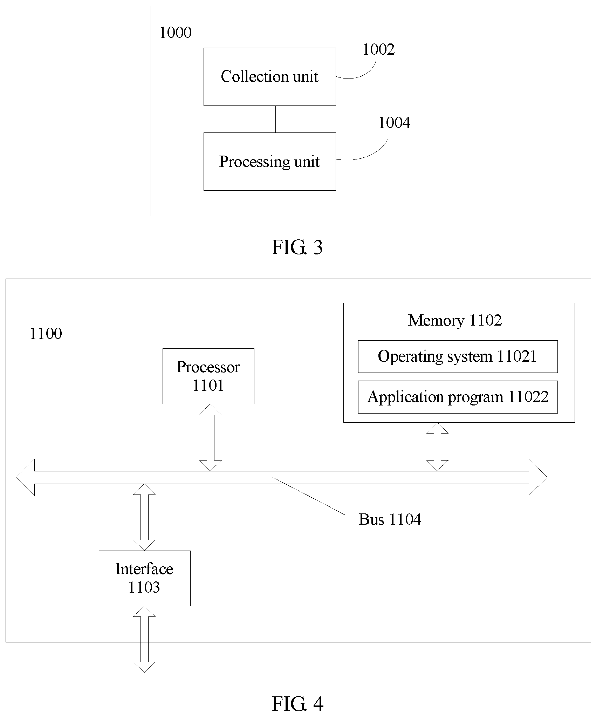

FIG. 3 is a schematic structural diagram of a monitoring apparatus 1000 according to an embodiment of this application. The monitoring apparatus 1000 shown in FIG. 3 may perform corresponding steps performed by the monitoring apparatus 1000 in the method in the foregoing embodiment. As shown in FIG. 3, the monitoring apparatus 1000 includes a collection unit 1002 and a processing unit 1004.

The collection unit 1002 is configured to collect, based on a to-be-monitored protocol type, data traffic associated with the to-be-monitored protocol type in data traffic from user equipment or an IP network, to obtain first data traffic, where the to-be-monitored protocol type is used to indicate an application associated with data traffic.

The processing unit 1004 is configured to obtain traffic information of the first data traffic, where the traffic information of the first data traffic includes a first data volume, and the first data volume is used to indicate a sum of lengths of all packets in the first data traffic.

The processing unit 1004 is further configured to determine, based on the traffic information of the first data traffic, whether an identification error exists in the first data traffic associated with the to-be-monitored protocol type.

When the processing unit 1004 determines that an identification error exists in the first data traffic associated with the to-be-monitored protocol type, the processing unit 1004 is further configured to trigger an identification error protection action.

The identification error protection action includes at least one of the following actions: alarming, traffic allowing, traffic limiting, and traffic blocking.

Optionally, when determining, based on the traffic information of the first data traffic, whether an identification error exists in the first data traffic associated with the to-be-monitored protocol type, the processing unit 1004 is further specifically configured to: when an absolute value of a deviation rate of a value of the traffic information of the first data traffic relative to a first threshold is greater than a first predetermined deviation rate, determine that an identification error exists in the first data traffic associated with the to-be-monitored protocol type, where the first threshold is a preset value.

Optionally, when collecting, based on the to-be-monitored protocol type, the data traffic associated with the to-be-monitored protocol type in the data traffic from the user equipment or the IP network, to obtain the first data traffic, the collection unit 1002 is specifically configured to collect, based on the to-be-monitored protocol type, data traffic that is associated with the to-be-monitored protocol type in the data traffic from the user equipment or the IP network and that is corresponding to a first predetermined moment, to obtain the first data traffic. The collection unit 1002 is further configured to collect, based on the to-be-monitored protocol type, data traffic that is associated with the to-be-monitored protocol type in the data traffic from the user equipment or the IP network and that is corresponding to a second predetermined moment, to obtain second data traffic, where the first predetermined moment and the second predetermined moment are a same moment at different dates. The processing unit 1004 is further configured to obtain traffic information of the second data traffic, where the traffic information of the second data traffic includes a second data volume, and the second data volume is used to indicate a sum of lengths of all packets in the second data traffic. The processing unit 1004 is further configured to determine, based on an absolute value of a deviation rate of a value of the traffic information of the second data traffic relative to a second threshold, whether an identification error exists in the second data traffic associated with the to-be-monitored protocol type, where the second threshold is the value of the traffic information of the first data traffic. When the absolute value of the deviation rate of the value of the traffic information of the second data traffic relative to the second threshold is greater than a second predetermined deviation rate, the processing unit 1004 is further configured to determine that an identification error exists in the second data traffic associated with the to-be-monitored protocol type. When the processing unit 1004 determines that an identification error exists in the second data traffic associated with the to-be-monitored protocol type, the processing unit 1004 is further configured to trigger an identification error protection action.

Optionally, when collecting, based on the to-be-monitored protocol type, the data traffic associated with the to-be-monitored protocol type in the data traffic from the user equipment or the IP network, to obtain the first data traffic, the collection unit 1002 is specifically configured to collect, based on the to-be-monitored protocol type, data traffic that is associated with the to-be-monitored protocol type in the data traffic from the user equipment or the IP network and that is corresponding to a first predetermined time interval, to obtain the first data traffic. The collection unit 1002 is further configured to collect, based on the to-be-monitored protocol type, data traffic that is associated with the to-be-monitored protocol type in the data traffic from the user equipment or the IP network and that is corresponding to a second predetermined time interval, to obtain second data traffic, where a start moment of the first predetermined time interval and a start moment of the second predetermined time interval are a same moment at different dates, and an end moment of the first predetermined time interval and an end moment of the second predetermined time interval are a same moment at different dates. The processing unit 1004 is further configured to obtain traffic information of the second data traffic, where the traffic information of the second data traffic includes a second data volume, and the second data volume is used to indicate a sum of lengths of all packets in the second data traffic. The processing unit 1004 is further configured to determine, based on an absolute value of a deviation rate of a value of the traffic information of the second data traffic relative to a second threshold, whether an identification error exists in the second data traffic associated with the to-be-monitored protocol type, where the second threshold is the value of the traffic information of the first data traffic. When the absolute value of the deviation rate of the value of the traffic information of the second data traffic relative to the second threshold is greater than a second predetermined deviation rate, the processing unit 1004 is further configured to determine that an identification error exists in the second data traffic associated with the to-be-monitored protocol type. When the processing unit 1004 determines that an identification error exists in the second data traffic associated with the to-be-monitored protocol type, the processing unit 1004 is further configured to trigger an identification error protection action.

Optionally, when the absolute value of the deviation rate of the value of the traffic information of the second data traffic relative to the second threshold is less than or equal to the second predetermined deviation rate, the processing unit 1004 is further configured to determine that no identification error exists in the second data traffic associated with the to-be-monitored protocol type. When the processing unit 1004 determines that no identification error exists in the second data traffic associated with the to-be-monitored protocol type, the processing unit 1004 is further configured to update the second threshold to an average of the value of the traffic information of the second data traffic and the value of the traffic information of the first data traffic.

Optionally, the traffic information of the first data traffic further includes a first user quantity, and the first user quantity is used to indicate a quantity of users associated with the first data traffic. The absolute value of the deviation rate of the value of the traffic information of the first data traffic relative to the first threshold is specifically a sum of a value obtained by multiplying an absolute value of a deviation rate of a value of the first data volume relative to a first data volume threshold by a first weight and a value obtained by multiplying an absolute value of a deviation rate of a value of the first user quantity relative to a first user quantity threshold by a second weight, the first threshold includes the first data volume threshold and the first user quantity threshold, and a sum of the first weight and the second weight is 1.

Optionally, the traffic information of the first data traffic further includes a first user quantity, and the first user quantity is used to indicate a quantity of users associated with the first data traffic. The traffic information of the second data traffic further includes a second user quantity, and the second user quantity is used to indicate a quantity of users associated with the second data traffic. The absolute value of the deviation rate of the value of the traffic information of the second data traffic relative to the second threshold is specifically a sum of a value obtained by multiplying an absolute value of a deviation rate of a value of the second data volume relative to a second data volume threshold by a first weight and a value obtained by multiplying an absolute value of a deviation rate of a value of the second user quantity relative to a second user quantity threshold by a second weight, the second threshold includes the second data volume threshold and the second user quantity threshold, the second data volume threshold is a value of the first data volume of the first data traffic, the second user quantity threshold is a value of the first user quantity of the first data traffic, and a sum of the first weight and the second weight is 1.

Optionally, the traffic information of the first data traffic further includes a first user quantity, and the first user quantity is used to indicate a quantity of users associated with the first data traffic. The traffic information of the second data traffic further includes a second user quantity, and the second user quantity is used to indicate a quantity of users associated with the second data traffic. The absolute value of the deviation rate of the value of the traffic information of the second data traffic relative to the second threshold is specifically a sum of a value obtained by multiplying an absolute value of a deviation rate of a value of the second data volume relative to a second data volume threshold by a first weight and a value obtained by multiplying an absolute value of a deviation rate of a value of the second user quantity relative to a second user quantity threshold by a second weight, the second threshold includes the second data volume threshold and the second user quantity threshold, the second data volume threshold is a value of the first data volume of the first data traffic, the second user quantity threshold is a value of the first user quantity of the first data traffic, and a sum of the first weight and the second weight is 1. When updating the second threshold to the average of the value of the traffic information of the second data traffic and the value of the traffic information of the first data traffic, the processing unit 1004 is specifically configured to update the second data volume threshold to an average of the value of the second data volume of the second data traffic and the value of the first data volume of the first data traffic, and the processing unit 1004 is further configured to update the second user quantity threshold to an average of the value of the second user quantity of the second data traffic and the value of the first user quantity of the first data traffic.

The monitoring apparatus shown in FIG. 3 may perform corresponding steps performed by the monitoring apparatus in the method in the foregoing embodiment. In this way, the monitoring apparatus monitors an identification error in data traffic associated with a to-be-monitored protocol type, and triggers a corresponding identification error protection action, to reduce a profit loss of a communications operator and improve user experience of Internet surfing.

FIG. 4 is a schematic structural diagram of hardware of a monitoring apparatus 1100 according to an embodiment of this application. The monitoring apparatus 1100 shown in FIG. 4 may perform corresponding steps performed by the monitoring apparatus in the method in the foregoing embodiment.

As shown in FIG. 4, the monitoring apparatus 1100 includes a processor 1101, a memory 1102, an interface 1103, and a bus 1104. The interface 1103 may be implemented in a wireless or wired manner, and specifically, may be a network adapter. The processor 1101, the memory 1102, and the interface 1103 are connected through the bus 1104.

The interface 1103 may specifically include a transmitter and a receiver, configured to: receive data traffic from user equipment or an IP network, or receive traffic information of data traffic from an SA device; and further configured to send an identification error protection action. For example, the interface 1103 is configured to support the operations in FIG.2: receiving the data traffic from the user equipment or the IP network and sending the identification error protection action triggered by the processor 1101. The processor 1101 is configured to perform processing that is performed by the monitoring apparatus in the foregoing embodiment. For example, the processor 1101 is configured to obtain traffic information of the first data traffic, where the traffic information of the first data traffic includes a first data volume, and the first data volume is used to indicate a sum of lengths of all packets in the first data traffic. The processor 1101 is further configured to determine, based on the traffic information of the first data traffic, whether an identification error exists in the first data traffic associated with the to-be-monitored protocol type. When the processor 1101 determines that an identification error exists in the first data traffic associated with the to-be-monitored protocol type, the processor 1101 is further configured to trigger an identification error protection action, and/or is configured to perform another process in the technology described in this application. For example, the processor 1101 is configured to support processes in S104, S106, and S108 in FIG. 2. The memory 1102 includes an operating system 11021 and an application program 11022, and is configured to store a program, code, or an instruction. When executing the program, the code, or the instruction, the processor or a hardware device may complete a processing process related to the monitoring apparatus in the method embodiment. Optionally, the memory 1102 may include a read-only memory (English: Read-only Memory, ROM for short) and a random access memory (English: Random Access Memory, RAM for short). The ROM includes a basic input/output system (English: Basic Input/Output System, BIOS for short) or an embedded system. The RAM includes an application program and an operating system. When the monitoring apparatus 1100 needs to run, the BIOS that is built into the ROM or a bootloader in the embedded system is used to lead a system to start, and lead the monitoring apparatus 1100 to enter a normal running state. After entering a normal running state, the monitoring apparatus 1100 runs the application program and the operating system in the RAM, to complete a processing process related to the monitoring apparatus in the method embodiment.

It can be understood that FIG. 4 shows only a simplified design of the monitoring apparatus. In actual application, the monitoring apparatus may include any quantities of interfaces, processors, or memories. In a possible implementation, all functions of the monitoring apparatus are integrated into the SA device. In another possible implementation, some functions of the monitoring apparatus are integrated into the SA device. In still another possible implementation, the monitoring apparatus is implemented by a hardware apparatus independent of the SA device.

In addition, an embodiment of this application provides a computer storage medium, configured to store a computer software instruction used by the monitoring apparatus. The computer storage medium includes a program designed for performing the foregoing method embodiment.

As shown in FIG. 1, an embodiment of this application further includes a system for monitoring data traffic, the system includes a monitoring apparatus, and the monitoring apparatus is the monitoring apparatus in FIG. 3 or FIG. 4.

The methods or algorithm steps described in combination with the content disclosed in this application may be implemented by hardware, or may be implemented by a processor by executing a software instruction. The software instruction may include a corresponding software module. The software module may be located in a RAM memory, a flash memory, a ROM memory, an EPROM memory, an EEPROM memory, a register, a hard disk, a removable hard disk, a CD-ROM, or a storage medium in any other forms well-known in the art. For example, a storage medium is coupled to the processor, so that the processor can read information from the storage medium and can write information into the storage medium. Certainly, the storage medium may be a component of the processor. The processor and the storage medium may be located in an ASIC. In addition, the ASIC may be located in user equipment. Certainly, the processor and the storage medium may exist in the user equipment as discrete components.

A person skilled in the art should be aware that in the foregoing one or more examples, functions described in this application may be implemented by hardware, software, firmware, or any combination thereof. When this application is implemented by software, the functions may be stored in a computer readable medium or transmitted as one or more instructions or code in the computer readable medium. The computer readable medium includes a computer storage medium and a communications medium, and the communications medium includes any medium that enables a computer program to be transmitted from one place to another. The storage medium may be any available medium accessible to a general-purpose or dedicated computer.

In the foregoing specific implementations, the objectives, technical solutions, and beneficial effects of this application are further described in detail. It should be understood that the foregoing descriptions are merely specific implementations of this application.

## Claims

1. A method for monitoring data traffic, wherein the method comprises:
collecting (S102), by a monitoring apparatus based on a to-be-monitored protocol type, data traffic associated with the to-be-monitored protocol type in data traffic from user equipment or an Internet Protocol, IP, network, to obtain first data traffic, wherein the to-be-monitored protocol type is used to indicate an application associated with data traffic;
obtaining (S104), by the monitoring apparatus, traffic information of the first data traffic, wherein the traffic information of the first data traffic comprises a first data volume, and the first data volume is used to indicate a sum of lengths of all packets in the first data traffic;
determining (S106), by the monitoring apparatus based on the traffic information of the first data traffic, whether an identification error exists in the first data traffic associated with the to-be-monitored protocol type; and
when the monitoring apparatus determines that an identification error exists in the first data traffic associated with the to-be-monitored protocol type, triggering (S108), by the monitoring apparatus, an identification error protection action, wherein the determining (S106), by the monitoring apparatus based on the traffic information of the first data traffic, whether an identification error exists in the first data traffic associated with the to-be-monitored protocol type comprises:
when an absolute value of a deviation rate of a value of the traffic information of the first data traffic relative to a first threshold is greater than a first predetermined deviation rate, determining, by the monitoring apparatus, that an identification error exists in the first data traffic associated with the to-be-monitored protocol type, wherein the first threshold is a preset value.

2. The method according to claim 1, wherein the collecting (S102), by a monitoring apparatus based on a to-be-monitored protocol type, data traffic associated with the to-be-monitored protocol type in data traffic from user equipment or an Internet Protocol, IP, network, to obtain first data traffic comprises: collecting, by the monitoring apparatus based on the to-be-monitored protocol type, data traffic that is associated with the to-be-monitored protocol type in the data traffic from the user equipment or the IP network and that is corresponding to a first predetermined moment, to obtain the first data traffic; and
the method further comprises:
collecting, by the monitoring apparatus based on the to-be-monitored protocol type, data traffic that is associated with the to-be-monitored protocol type in the data traffic from the user equipment or the IP network and that is corresponding to a second predetermined moment, to obtain second data traffic, wherein the first predetermined moment and the second predetermined moment are a same moment at different dates;
obtaining, by the monitoring apparatus, traffic information of the second data traffic, wherein the traffic information of the second data traffic comprises a second data volume, and the second data volume is used to indicate a sum of lengths of all packets in the second data traffic;
determining, by the monitoring apparatus based on an absolute value of a deviation rate of a value of the traffic information of the second data traffic relative to a second threshold, whether an identification error exists in the second data traffic associated with the to-be-monitored protocol type, wherein the second threshold is the value of the traffic information of the first data traffic;
when the absolute value of the deviation rate of the value of the traffic information of the second data traffic relative to the second threshold is greater than a second predetermined deviation rate, determining, by the monitoring apparatus, that an identification error exists in the second data traffic associated with the to-be-monitored protocol type; and
when the monitoring apparatus determines that an identification error exists in the second data traffic associated with the to-be-monitored protocol type, triggering, by the monitoring apparatus, an identification error protection action.

3. The method according to claim 1, wherein the collecting (S102), by a monitoring apparatus based on a to-be-monitored protocol type, data traffic associated with the to-be-monitored protocol type in data traffic from user equipment or an Internet Protocol, IP, network, to obtain first data traffic comprises: collecting, by the monitoring apparatus based on the to-be-monitored protocol type, data traffic that is associated with the to-be-monitored protocol type in the data traffic from the user equipment or the IP network and that is corresponding to a first predetermined time interval, to obtain the first data traffic; and
the method further comprises:
collecting, by the monitoring apparatus based on the to-be-monitored protocol type, data traffic that is associated with the to-be-monitored protocol type in the data traffic from the user equipment or the IP network and that is corresponding to a second predetermined time interval, to obtain second data traffic, wherein a start moment of the first predetermined time interval and a start moment of the second predetermined time interval are a same moment at different dates, and an end moment of the first predetermined time interval and an end moment of the second predetermined time interval are a same moment at different dates;
obtaining, by the monitoring apparatus, traffic information of the second data traffic, wherein the traffic information of the second data traffic comprises a second data volume, and the second data volume is used to indicate a sum of lengths of all packets in the second data traffic;
determining, by the monitoring apparatus based on an absolute value of a deviation rate of a value of the traffic information of the second data traffic relative to a second threshold, whether an identification error exists in the second data traffic associated with the to-be-monitored protocol type, wherein the second threshold is the value of the traffic information of the first data traffic;
when the absolute value of the deviation rate of the value of the traffic information of the second data traffic relative to the second threshold is greater than a second predetermined deviation rate, determining, by the monitoring apparatus, that an identification error exists in the second data traffic associated with the to-be-monitored protocol type; and
when the monitoring apparatus determines that an identification error exists in the second data traffic associated with the to-be-monitored protocol type, triggering, by the monitoring apparatus, an identification error protection action.

4. The method according to claim 2 or 3, wherein the method further comprises:
when the absolute value of the deviation rate of the value of the traffic information of the second data traffic relative to the second threshold is less than or equal to the second predetermined deviation rate, determining, by the monitoring apparatus, that no identification error exists in the second data traffic associated with the to-be-monitored protocol type; and
when the monitoring apparatus determines that no identification error exists in the second data traffic associated with the to-be-monitored protocol type, updating, by the monitoring apparatus, the second threshold to an average of the value of the traffic information of the second data traffic and the value of the traffic information of the first data traffic.

5. The method according to claim 1, wherein
the traffic information of the first data traffic further comprises a first user quantity, and the first user quantity is used to indicate a quantity of users associated with the first data traffic; and
the absolute value of the deviation rate of the value of the traffic information of the first data traffic relative to the first threshold is specifically a sum of a value obtained by multiplying an absolute value of a deviation rate of a value of the first data volume relative to a first data volume threshold by a first weight and a value obtained by multiplying an absolute value of a deviation rate of a value of the first user quantity relative to a first user quantity threshold by a second weight, the first threshold comprises the first data volume threshold and the first user quantity threshold, and a sum of the first weight and the second weight is 1.

6. The method according to claim 2 or 3, wherein
the traffic information of the first data traffic further comprises a first user quantity, and the first user quantity is used to indicate a quantity of users associated with the first data traffic;
the traffic information of the second data traffic further comprises a second user quantity, and the second user quantity is used to indicate a quantity of users associated with the second data traffic; and
the absolute value of the deviation rate of the value of the traffic information of the second data traffic relative to the second threshold is specifically a sum of a value obtained by multiplying an absolute value of a deviation rate of a value of the second data volume relative to a second data volume threshold by a first weight and a value obtained by multiplying an absolute value of a deviation rate of a value of the second user quantity relative to a second user quantity threshold by a second weight, the second threshold comprises the second data volume threshold and the second user quantity threshold, the second data volume threshold is a value of the first data volume of the first data traffic, the second user quantity threshold is a value of the first user quantity of the first data traffic, and a sum of the first weight and the second weight is 1.

7. The method according to claim 4, wherein
the traffic information of the first data traffic further comprises a first user quantity, and the first user quantity is used to indicate a quantity of users associated with the first data traffic;
the traffic information of the second data traffic further comprises a second user quantity, and the second user quantity is used to indicate a quantity of users associated with the second data traffic;
the absolute value of the deviation rate of the value of the traffic information of the second data traffic relative to the second threshold is specifically a sum of a value obtained by multiplying an absolute value of a deviation rate of a value of the second data volume relative to a second data volume threshold by a first weight and a value obtained by multiplying an absolute value of a deviation rate of a value of the second user quantity relative to a second user quantity threshold by a second weight, the second threshold comprises the second data volume threshold and the second user quantity threshold, the second data volume threshold is a value of the first data volume of the first data traffic, the second user quantity threshold is a value of the first user quantity of the first data traffic, and a sum of the first weight and the second weight is 1; and
the updating, by the monitoring apparatus, the second threshold to an average of the value of the traffic information of the second data traffic and the value of the traffic information of the first data traffic specifically comprises: updating, by the monitoring apparatus, the second data volume threshold to an average of the value of the second data volume of the second data traffic and the value of the first data volume of the first data traffic, and updating, by the monitoring apparatus, the second user quantity threshold to an average of the value of the second user quantity of the second data traffic and the value of the first user quantity of the first data traffic.

8. The method according to any one of claims 1 to 7, wherein
the identification error protection action comprises at least one of the following actions: alarming, traffic allowing, traffic limiting, and traffic blocking.

9. A monitoring apparatus for monitoring data traffic, wherein the monitoring apparatus comprises:
a collection unit (1002), configured to collect, based on a to-be-monitored protocol type, data traffic associated with the to-be-monitored protocol type in data traffic from user equipment or an Internet Protocol, IP, network, to obtain first data traffic, wherein the to-be-monitored protocol type is used to indicate an application associated with data traffic; and
a processing unit (1004), configured to obtain traffic information of the first data traffic, wherein the traffic information of the first data traffic comprises a first data volume, and the first data volume is used to indicate a sum of lengths of all packets in the first data traffic, wherein
the processing unit (1004) is further configured to determine, based on the traffic information of the first data traffic, whether an identification error exists in the first data traffic associated with the to-be-monitored protocol type; and
when the processing unit (1004) determines that an identification error exists in the first data traffic associated with the to-be-monitored protocol type, the processing unit (1004) is further configured to trigger an identification error protection action, wherein when determining, based on the traffic information of the first data traffic, whether an identification error exists in the first data traffic associated with the to-be-monitored protocol type, the processing unit (1004) is further specifically configured to:
when an absolute value of a deviation rate of a value of the traffic information of the first data traffic relative to a first threshold is greater than a first predetermined deviation rate, determine that an identification error exists in the first data traffic associated with the to-be-monitored protocol type, wherein the first threshold is a preset value.

10. The monitoring apparatus according to claim 9, wherein when collecting, based on the to-be-monitored protocol type, the data traffic associated with the to-be-monitored protocol type in the data traffic from the user equipment or the Internet Protocol, IP, network, to obtain the first data traffic, the collection unit (1004) is specifically configured to collect, based on the to-be-monitored protocol type, data traffic that is associated with the to-be-monitored protocol type in the data traffic from the user equipment or the IP network and that is corresponding to a first predetermined moment, to obtain the first data traffic;
the collection unit (1004) is further configured to collect, based on the to-be-monitored protocol type, data traffic that is associated with the to-be-monitored protocol type in the data traffic from the user equipment or the IP network and that is corresponding to a second predetermined moment, to obtain second data traffic, wherein the first predetermined moment and the second predetermined moment are a same moment at different dates;
the processing unit (1004) is further configured to obtain traffic information of the second data traffic, wherein the traffic information of the second data traffic comprises a second data volume, and the second data volume is used to indicate a sum of lengths of all packets in the second data traffic;
the processing unit (1004) is further configured to determine, based on an absolute value of a deviation rate of a value of the traffic information of the second data traffic relative to a second threshold, whether an identification error exists in the second data traffic associated with the to-be-monitored protocol type, wherein the second threshold is the value of the traffic information of the first data traffic;
when the absolute value of the deviation rate of the value of the traffic information of the second data traffic relative to the second threshold is greater than a second predetermined deviation rate, the processing unit (1004) is further configured to determine that an identification error exists in the second data traffic associated with the to-be-monitored protocol type; and
when the processing unit (1004) determines that an identification error exists in the second data traffic associated with the to-be-monitored protocol type, the processing unit (1004) is further configured to trigger an identification error protection action.

11. The monitoring apparatus according to claim 9, wherein when collecting, based on the to-be-monitored protocol type, the data traffic associated with the to-be-monitored protocol type in the data traffic from the user equipment or the Internet Protocol, IP, network, to obtain the first data traffic, the collection unit (1004) is specifically configured to collect, based on the to-be-monitored protocol type, data traffic that is associated with the to-be-monitored protocol type in the data traffic from the user equipment or the IP network and that is corresponding to a first predetermined time interval, to obtain the first data traffic;
the collection unit (1004) is further configured to collect, based on the to-be-monitored protocol type, data traffic that is associated with the to-be-monitored protocol type in the data traffic from the user equipment or the IP network and that is corresponding to a second predetermined time interval, to obtain second data traffic, wherein a start moment of the first predetermined time interval and a start moment of the second predetermined time interval are a same moment at different dates, and an end moment of the first predetermined time interval and an end moment of the second predetermined time interval are a same moment at different dates;
the processing unit (1004) is further configured to obtain traffic information of the second data traffic, wherein the traffic information of the second data traffic comprises a second data volume, and the second data volume is used to indicate a sum of lengths of all packets in the second data traffic;
the processing unit (1004) is further configured to determine, based on an absolute value of a deviation rate of a value of the traffic information of the second data traffic relative to a second threshold, whether an identification error exists in the second data traffic associated with the to-be-monitored protocol type, wherein the second threshold is the value of the traffic information of the first data traffic;
when the absolute value of the deviation rate of the value of the traffic information of the second data traffic relative to the second threshold is greater than a second predetermined deviation rate, the processing unit (1004) is further configured to determine that an identification error exists in the second data traffic associated with the to-be-monitored protocol type; and
when the processing unit (1004) determines that an identification error exists in the second data traffic associated with the to-be-monitored protocol type, the processing unit is further configured to trigger an identification error protection action.

12. The monitoring apparatus according to claim 10 or 11, wherein
when the absolute value of the deviation rate of the value of the traffic information of the second data traffic relative to the second threshold is less than or equal to the second predetermined deviation rate, the processing unit (1004) is further configured to determine that no identification error exists in the second data traffic associated with the to-be-monitored protocol type; and
when the processing unit (1004) determines that no identification error exists in the second data traffic associated with the to-be-monitored protocol type, the processing unit (1004) is further configured to update the second threshold to an average of the value of the traffic information of the second data traffic and the value of the traffic information of the first data traffic.

13. The monitoring apparatus according to claim 9, wherein
the traffic information of the first data traffic further comprises a first user quantity, and the first user quantity is used to indicate a quantity of users associated with the first data traffic; and
the absolute value of the deviation rate of the value of the traffic information of the first data traffic relative to the first threshold is specifically a sum of a value obtained by multiplying an absolute value of a deviation rate of a value of the first data volume relative to a first data volume threshold by a first weight and a value obtained by multiplying an absolute value of a deviation rate of a value of the first user quantity relative to a first user quantity threshold by a second weight, the first threshold comprises the first data volume threshold and the first user quantity threshold, and a sum of the first weight and the second weight is 1.

## Patentansprüche

1. Verfahren zum Überwachen von Datenverkehr, wobei das Verfahren Folgendes umfasst:
Sammeln (S102), durch eine Überwachungsvorrichtung, basierend auf einer zu überwachenden Protokollart, von Datenverkehr, der der zu überwachenden Protokollart zugehörig ist, in Datenverkehr von einer Benutzereinrichtung oder einem Internetprotokoll(IP)-Netzwerk, um ersten Datenverkehr zu erhalten, wobei die zu überwachende Protokollart verwendet wird, um eine Anwendung anzugeben, die dem Datenverkehr zugehörig ist;
Erhalten (S104), durch die Überwachungsvorrichtung, von Verkehrsinformationen des ersten Datenverkehrs, wobei die Verkehrsinformationen des ersten Datenverkehrs ein erstes Datenvolumen umfassen und das erste Datenvolumen verwendet wird, um eine Summe von Längen gesamter Pakete in dem ersten Datenverkehr anzugeben;
Bestimmen (S106), durch die Überwachungsvorrichtung, basierend auf den Verkehrsinformationen des ersten Datenverkehrs, ob ein Identifikationsfehler in dem ersten Datenverkehr vorliegt, der der zu überwachenden Protokollart zugehörig ist; und
wenn die Überwachungsvorrichtung bestimmt, dass ein Identifikationsfehler in dem ersten Datenverkehr vorliegt, der der zu überwachenden Protokollart zugehörig ist, Auslösen (S108), durch die Überwachungsvorrichtung, einer Identifikationsfehlerschutzaktion, wobei das Bestimmen (S106), durch die Überwachungsvorrichtung, basierend auf den Verkehrsinformationen des ersten Datenverkehrs, ob ein Identifikationsfehler in dem ersten Datenverkehr vorliegt, der der zu überwachenden Protokollart zugehörig ist, Folgendes umfasst:
wenn ein Absolutwert einer Abweichungsrate eines Wertes der Verkehrsinformationen des ersten Datenverkehrs relativ zu einer ersten Schwelle größer als eine erste zuvor bestimmte Abweichungsrate ist, Bestimmen, durch die Überwachungsvorrichtung, dass ein Identifikationsfehler in dem ersten Datenverkehr vorliegt, der der zu überwachenden Protokollart zugehörig ist, wobei die erste Schwelle ein voreingestellter Wert ist.

2. Verfahren nach Anspruch 1, wobei das Sammeln (S102), durch eine Überwachungsvorrichtung, basierend auf einer zu überwachenden Protokollart, von Datenverkehr, der der zu überwachenden Protokollart zugehörig ist, in Datenverkehr von der Benutzereinrichtung oder einem Internetprotokoll(IP)-Netzwerk, um ersten Datenverkehr zu erhalten, Folgendes umfasst: Sammeln, durch die Überwachungsvorrichtung, basierend auf der zu überwachenden Protokollart, von Datenverkehr, der der zu überwachenden Protokollart zugehörig ist, in dem Datenverkehr von der Benutzereinrichtung oder dem IP-Netzwerk und der einem ersten zuvor bestimmten Moment entspricht, um den ersten Datenverkehr zu erhalten; und
das Verfahren ferner Folgendes umfasst:
Sammeln, durch die Überwachungsvorrichtung, basierend auf der zu überwachenden Protokollart, von Datenverkehr, der der zu überwachenden Protokollart zugehörig ist, in dem Datenverkehr von der Benutzereinrichtung oder dem IP-Netzwerk und der einem zweiten zuvor bestimmten Moment entspricht, um einen zweiten Datenverkehr zu erhalten, wobei der erste zuvor bestimmte Moment und der zweite zuvor bestimmte Moment an unterschiedlichen Zeitpunkten ein selber Moment sind;
Erhalten, durch die Überwachungsvorrichtung, von Verkehrsinformationen des zweiten Datenverkehrs, wobei die Verkehrsinformationen des zweiten Datenverkehrs ein zweites Datenvolumen umfassen und das zweite Datenvolumen verwendet wird, um eine Summe von Längen der gesamten Pakete in dem zweiten Datenverkehr anzugeben;
Bestimmen, durch die Überwachungsvorrichtung, basierend auf einem Absolutwert einer Abweichungsrate eines Wertes der Verkehrsinformationen des zweiten Datenverkehrs relativ zu einer zweiten Schwelle, ob ein Identifikationsfehler in dem zweiten Datenverkehr vorliegt, der der zu überwachenden Protokollart zugehörig ist, wobei die zweite Schwelle der Wert der Verkehrsinformationen des ersten Datenverkehrs ist;
wenn der Absolutwert der Abweichungsrate des Wertes der Verkehrsinformationen des zweiten Datenverkehrs relativ zu der zweiten Schwelle größer als eine zweite zuvor bestimmte Abweichungsrate ist, Bestimmen, durch die Überwachungsvorrichtung, dass ein Identifikationsfehler in dem zweiten Datenverkehr vorliegt, der der zu überwachenden Protokollart zugehörig ist; und
wenn die Überwachungsvorrichtung bestimmt, dass ein Identifikationsfehler in dem zweiten Datenverkehr vorliegt, der der zu überwachenden Protokollart zugehörig ist, Auslösen, durch die Überwachungsvorrichtung, einer Identifikationsfehlerschutzaktion.

3. Verfahren nach Anspruch 1, wobei das Sammeln (S102), durch eine Überwachungsvorrichtung, basierend auf einer zu überwachenden Protokollart, von Datenverkehr, der der zu überwachenden Protokollart zugehörig ist, in Datenverkehr von der Benutzereinrichtungen oder einem Internetprotokoll(IP)-Netzwerk, um ersten Datenverkehr zu erhalten, Folgendes umfasst: Sammeln, durch die Überwachungsvorrichtung, basierend auf der zu überwachenden Protokollart, von Datenverkehr, der der zu überwachenden Protokollart zugehörig ist, in dem Datenverkehr von der Benutzereinrichtung oder dem IP-Netzwerk und der einem ersten zuvor bestimmten Zeitintervall entspricht, um den ersten Datenverkehr zu erhalten; und
das Verfahren ferner Folgendes umfasst:
Sammeln, durch die Überwachungsvorrichtung, basierend auf der zu überwachenden Protokollart, von Datenverkehr, der der zu überwachenden Protokollart zugehörig ist, in dem Datenverkehr von der Benutzereinrichtung oder dem IP-Netzwerk und der einem zweiten zuvor bestimmten Zeitintervall entspricht, um zweiten Datenverkehr zu erhalten, wobei ein Startmoment des ersten zuvor bestimmten Zeitintervalls und ein Startmoment des zweiten zuvor bestimmten Zeitintervalls zu unterschiedlichen Zeitpunkten ein selber Moment sind und ein Endmoment des ersten zuvor bestimmten Zeitintervalls und ein Endmoment des zweiten zuvor bestimmten Zeitintervalls zu unterschiedlichen Zeitpunkten ein selber Moment sind;
Erhalten, durch die Überwachungsvorrichtung, von Verkehrsinformationen des zweiten Datenverkehrs, wobei die Verkehrsinformationen des zweiten Datenverkehrs ein zweites Datenvolumen umfassen und das zweite Datenvolumen verwendet wird, um eine Summe von Längen der gesamten Pakete in dem zweiten Datenverkehr anzugeben;
Bestimmen, durch die Überwachungsvorrichtung, basierend auf einem Absolutwert einer Abweichungsrate eines Wertes der Verkehrsinformationen des zweiten Datenverkehrs relativ zu einer zweiten Schwelle, ob ein Identifikationsfehler in dem zweiten Datenverkehr vorliegt, der der zu überwachenden Protokollart zugehörig ist, wobei die zweite Schwelle der Wert der Verkehrsinformationen des ersten Datenverkehrs ist;
wenn der Absolutwert der Abweichungsrate des Wertes der Verkehrsinformationen des zweiten Datenverkehrs relativ zu der zweiten Schwelle größer als eine zweite zuvor bestimmte Abweichungsrate ist, Bestimmen, durch die Überwachungsvorrichtung, dass ein Identifikationsfehler in dem zweiten Datenverkehr vorliegt, der der zu überwachenden Protokollart zugehörig ist; und
wenn die Überwachungsvorrichtung bestimmt, dass ein Identifikationsfehler in dem zweiten Datenverkehr vorliegt, der der zu überwachenden Protokollart zugehörig ist, Auslösen, durch die Überwachungsvorrichtung, einer Identifikationsfehlerschutzaktion.

4. Verfahren nach Anspruch 2 oder 3, wobei das Verfahren ferner Folgendes umfasst:
wenn der Absolutwert der Abweichungsrate des Wertes der Verkehrsinformationen des zweiten Datenverkehrs relativ zu der zweiten Schwelle kleiner als oder gleich der zweiten zuvor bestimmten Abweichungsrate ist, Bestimmen, durch die Überwachungsvorrichtung, dass kein Identifikationsfehler in dem zweiten Datenverkehr vorliegt, der der zu überwachenden Protokollart zugehörig ist; und
wenn die Überwachungsvorrichtung bestimmt, dass kein Identifikationsfehler in dem zweiten Datenverkehr vorliegt, der der zu überwachenden Protokollart zugehörig ist, Aktualisieren, durch die Überwachungsvorrichtung, der zweiten Schwelle auf einen Durchschnitt des Wertes der Verkehrsinformationen des zweiten Datenverkehrs und des Wertes der Verkehrsinformationen des ersten Datenverkehrs.

5. Verfahren nach Anspruch 1, wobei
die Verkehrsinformationen des ersten Datenverkehrs ferner eine erste Benutzeranzahl umfassen und die erste Benutzeranzahl verwendet wird, um eine Anzahl von Benutzern anzugeben, die dem ersten Datenverkehr zugehörig sind; und
der Absolutwert der Abweichungsrate des Wertes der Verkehrsinformationen des ersten Datenverkehrs relativ zu der ersten Schwelle speziell eine Summe eines Wertes, der durch Multiplizieren eines Absolutwertes einer Abweichungsrate eines Wertes des ersten Datenvolumens relativ zu einer Schwelle des ersten Datenvolumens mit einer ersten Gewichtung erhalten wird, und eines Wertes ist, der durch Multiplizieren eines Absolutwertes einer Abweichungsrate eines Wertes der ersten Benutzeranzahl relativ zu einer Schwelle der ersten Benutzeranzahl mit einer zweiten Gewichtung erhalten wird, wobei die erste Schwelle die Schwelle des ersten Datenvolumens und die Schwelle der ersten Benutzeranzahl umfasst und eine Summe der ersten Gewichtung und der zweiten Gewichtung 1 ist.

6. Verfahren nach Anspruch 2 oder 3, wobei
die Verkehrsinformationen des ersten Datenverkehrs ferner eine erste Benutzeranzahl umfassen und die erste Benutzeranzahl verwendet wird, um eine Anzahl von Benutzern anzugeben, die dem ersten Datenverkehr zugehörig sind;
die Verkehrsinformationen des zweiten Datenverkehrs ferner eine zweite Benutzeranzahl umfassen und die zweite Benutzeranzahl verwendet wird, um eine Anzahl von Benutzern anzugeben, die dem zweiten Datenverkehr zugehörig sind; und
der Absolutwert der Abweichungsrate des Wertes der Verkehrsinformationen des zweiten Datenverkehrs relativ zu der zweiten Schwelle speziell eine Summe eines Wertes, der durch Multiplizieren eines Absolutwertes einer Abweichungsrate eines Wertes des zweiten Datenvolumens relativ zu einer Schwelle des zweiten Datenvolumens mit einer ersten Gewichtung erhalten wird, und eines Wertes ist, der durch Multiplizieren eines Absolutwertes einer Abweichungsrate eines Wertes der zweiten Benutzeranzahl relativ zu einer Schwelle der zweiten Benutzeranzahl mit einer zweiten Gewichtung erhalten wird, wobei die zweite Schwelle die Schwelle des zweiten Datenvolumens und die Schwelle der zweiten Benutzeranzahl umfasst, die Schwelle des zweiten Datenvolumens ein Wert des ersten Datenvolumens des ersten Datenverkehrs ist, die Schwelle der zweiten Benutzeranzahl ein Wert der ersten Benutzeranzahl des ersten Datenverkehrs ist und eine Summe der ersten Gewichtung und der zweiten Gewichtung 1 ist.

7. Verfahren nach Anspruch 4, wobei
die Verkehrsinformationen des ersten Datenverkehrs ferner eine erste Benutzeranzahl umfassen und die erste Benutzeranzahl verwendet wird, um eine Anzahl von Benutzern anzugeben, die dem ersten Datenverkehr zugehörig sind;
die Verkehrsinformationen des zweiten Datenverkehrs ferner eine zweite Benutzeranzahl umfassen und die zweite Benutzeranzahl verwendet wird, um eine Anzahl von Benutzern anzugeben, die dem zweiten Datenverkehr zugehörig sind;
der Absolutwert der Abweichungsrate des Wertes der Verkehrsinformationen des zweiten Datenverkehrs relativ zu der zweiten Schwelle speziell eine Summe eines Wertes, der durch Multiplizieren eines Absolutwertes einer Abweichungsrate eines Wertes des zweiten Datenvolumens relativ zu einer Schwelle des zweiten Datenvolumens mit einer ersten Gewichtung erhalten wird, und eines Wertes ist, der durch Multiplizieren eines Absolutwertes einer Abweichungsrate eines Wertes der zweiten Benutzeranzahl relativ zu einer Schwelle der zweiten Benutzeranzahl mit einer zweiten Gewichtung erhalten wird, wobei die zweite Schwelle die Schwelle des zweiten Datenvolumens und die Schwelle der zweiten Benutzeranzahl umfasst, die Schwelle des zweiten Datenvolumens ein Wert des ersten Datenvolumens des ersten Datenverkehrs ist, die Schwelle der zweiten Benutzeranzahl ein Wert der ersten Benutzeranzahl des ersten Datenverkehrs ist und eine Summe der ersten Gewichtung und der zweiten Gewichtung 1 ist; und
das Aktualisieren, durch die Überwachungsvorrichtung, der zweiten Schwelle auf einen Durchschnitt des Wertes der Verkehrsinformationen des zweiten Datenverkehrs und des Wertes der Verkehrsinformationen des ersten Datenverkehrs speziell Folgendes umfasst: Aktualisieren, durch die Überwachungsvorrichtung, der Schwelle des zweiten Datenvolumens auf einen Durchschnitt des Wertes des zweiten Datenvolumens des zweiten Datenverkehrs und des Wertes des ersten Datenvolumens des ersten Datenverkehrs und Aktualisieren, durch die Überwachungsvorrichtung, der Schwelle der zweiten Benutzeranzahl auf einen Durchschnitt des Wertes der zweiten Benutzeranzahl des zweiten Datenverkehrs und des Wertes der ersten Benutzeranzahl des ersten Datenverkehrs.

8. Verfahren nach einem der Ansprüche 1 bis 7, wobei
die Identifikationsfehlerschutzaktion die folgenden Aktionen umfasst: Alarmieren, Verkehr ermöglichen, Verkehr begrenzen und/oder Verkehr blockieren.

9. Überwachungsvorrichtung zum Überwachen von Datenverkehr, wobei die Überwachungsvorrichtung Folgendes umfasst:
eine Sammlungseinheit (1002), die konfiguriert ist, um, basierend auf einer zu überwachenden Protokollart, Datenverkehr, der der zu überwachenden Protokollart zugehörig ist, in Datenverkehr von der Benutzereinrichtung oder einem Internetprotokoll(IP)-Netzwerk zu sammeln, um ersten Datenverkehr zu erhalten, wobei die zu überwachende Protokollart verwendet wird, um eine Anwendung anzugeben, die dem Datenverkehr zugehörig ist; und
eine Verarbeitungseinheit (1004), die konfiguriert ist, um Verkehrsinformationen des ersten Datenverkehrs zu erhalten, wobei die Verkehrsinformationen des ersten Datenverkehrs ein erstes Datenvolumen umfassen und das erste Datenvolumen verwendet wird, um eine Summe von Längen der gesamten Pakete in dem ersten Datenverkehr anzugeben, wobei
die Verarbeitungseinheit (1004) ferner konfiguriert ist, um, basierend auf den Verkehrsinformationen des ersten Datenverkehrs, zu bestimmen, ob ein Identifikationsfehler in dem ersten Datenverkehr vorliegt, der der zu überwachenden Protokollart zugehörig ist; und
wenn die Verarbeitungseinheit (1004) bestimmt, dass ein Identifikationsfehler in dem ersten Datenverkehr vorliegt, der der zu überwachenden Protokollart zugehörig ist, die Verarbeitungseinheit (1004) ferner konfiguriert ist, um eine Identifikationsfehlerschutzaktion auszulösen, wobei bei dem Bestimmen, basierend auf den Verkehrsinformationen des ersten Datenverkehrs, ob ein Identifikationsfehler in dem ersten Datenverkehr vorliegt, der der zu überwachenden Protokollart zugehörig ist, die Verarbeitungseinheit (1004) ferner speziell für Folgendes konfiguriert ist:
wenn ein Absolutwert einer Abweichungsrate eines Wertes der Verkehrsinformationen des ersten Datenverkehrs relativ zu einer ersten Schwelle größer als eine erste zuvor bestimmte Abweichungsrate ist, Bestimmen, dass ein Identifikationsfehler in dem ersten Datenverkehr vorliegt, der der zu überwachenden Protokollart zugehörig ist, wobei die erste Schwelle ein voreingestellter Wert ist.

10. Überwachungsvorrichtung nach Anspruch 9, wobei bei dem Sammeln, basierend auf der zu überwachenden Protokollart, des Datenverkehrs, der der zu überwachenden Protokollart zugehörig ist, in dem Datenverkehr von der Benutzereinrichtung oder dem Internetprotokoll(IP)-Netzwerk, um den ersten Datenverkehr zu erhalten, die Sammlungseinheit (1004) speziell konfiguriert ist, um, basierend auf der zu überwachenden Protokollart, Datenverkehr, der der zu überwachenden Protokollart zugehörig ist, in dem Datenverkehr von der Benutzereinrichtung oder dem IP-Netzwerk zu sammeln und der einem ersten zuvor bestimmten Moment entspricht, um den ersten Datenverkehr zu erhalten;
die Sammlungseinheit (1004) ferner konfiguriert ist, um, basierend auf der zu überwachenden Protokollart, Datenverkehr, der der zu überwachenden Protokollart zugehörig ist, in dem Datenverkehr von der Benutzereinrichtung oder dem IP-Netzwerk zu sammeln, und der einem zweiten zuvor bestimmten Moment entspricht, um zweiten Datenverkehr zu erhalten, wobei der erste zuvor bestimmte Moment und der zweite zuvor bestimmte Moment zu unterschiedlichen Zeitpunkten ein selber Moment sind;
die Verarbeitungseinheit (1004) ferner konfiguriert ist, um Verkehrsinformationen des zweiten Datenverkehrs zu erhalten, wobei die Verkehrsinformationen des zweiten Datenverkehrs ein zweites Datenvolumen umfassen und das zweite Datenvolumen verwendet wird, um eine Summe von Längen der gesamten Paketein in dem zweiten Datenverkehr anzugeben;
die Verarbeitungseinheit (1004) ferner konfiguriert ist, um, basierend auf einem Absolutwert einer Abweichungsrate eines Wertes der Verkehrsinformationen des zweiten Datenverkehrs relativ zu einer zweiten Schwelle, zu bestimmen, ob ein Identifikationsfehler in dem zweiten Datenverkehr vorliegt, der der zu überwachenden Protokollart zugehörig ist, wobei die zweite Schwelle der Wert der Verkehrsinformationen des ersten Datenverkehrs ist;
wenn der Absolutwert der Abweichungsrate des Wertes der Verkehrsinformationen des zweiten Datenverkehrs relativ zu der zweiten Schwelle größer als eine zweite zuvor bestimmte Abweichungsrate ist, die Verarbeitungseinheit (1004) ferner konfiguriert ist, um zu bestimmen, dass ein Identifikationsfehler in dem zweiten Datenverkehr vorliegt, der der zu überwachenden Protokollart zugehörig ist; und
wenn die Verarbeitungseinheit (1004) bestimmt, dass ein Identifikationsfehler in dem zweiten Datenverkehr vorliegt, der der zu überwachenden Protokollart zugehörig ist, die Verarbeitungseinheit (1004) ferner konfiguriert ist, um eine Identifikationsfehlerschutzaktion auszulösen.

11. Überwachungsvorrichtung nach Anspruch 9, wobei bei dem Sammeln, basierend auf der zu überwachenden Protokollart, des Datenverkehrs, der der zu überwachenden Protokollart zugehörig ist, in dem Datenverkehr von der Benutzereinrichtung oder dem Internetprotokoll(IP)-Netzwerk, um den ersten Datenverkehr zu erhalten, die Sammlungseinheit (1004) speziell konfiguriert ist, um, basierend auf der zu überwachenden Protokollart, Datenverkehr, der der zu überwachenden Protokollart zugehörig ist, in dem Datenverkehr von der Benutzereinrichtung oder dem IP-Netzwerk zu sammeln, und der einem ersten zuvor bestimmten Zeitintervall entspricht, um den ersten Datenverkehr zu erhalten;
die Sammlungseinheit (1004) ferner konfiguriert ist, um, basierend auf der zu überwachenden Protokollart, Datenverkehr, der der zu überwachenden Protokollart zugehörig ist, in dem Datenverkehr von der Benutzereinrichtung oder dem IP-Netzwerk zu sammeln, und der einem zweiten zuvor bestimmten Zeitintervall entspricht, um zweiten Datenverkehr zu erhalten, wobei ein Startmoment des ersten zuvor bestimmten Zeitintervalls und ein Startmoment des zweiten zuvor bestimmten Zeitintervalls zu unterschiedlichen Zeitpunkten ein selber Moment sind und ein Endmoment des ersten zuvor bestimmten Zeitintervalls und ein Endmoment des zweiten zuvor bestimmten Zeitintervalls zu unterschiedlichen Zeitpunkten ein selber Moment sind;
die Verarbeitungseinheit (1004) ferner konfiguriert ist, um Verkehrsinformationen des zweiten Datenverkehrs zu erhalten, wobei die Verkehrsinformationen des zweiten Datenverkehrs ein zweites Datenvolumen umfassen und das zweite Datenvolumen verwendet wird, um eine Summe von Längen der gesamten Pakete in in dem zweiten Datenverkehr anzugeben;
die Verarbeitungseinheit (1004) ferner konfiguriert ist, um, basierend auf einem Absolutwert einer Abweichungsrate eines Wertes der Verkehrsinformationen des zweiten Datenverkehrs relativ zu einer zweiten Schwelle, zu bestimmen, ob ein Identifikationsfehler in dem zweiten Datenverkehr vorliegt, der der zu überwachenden Protokollart zugehörig ist, wobei die zweite Schwelle der Wert der Verkehrsinformationen des ersten Datenverkehrs ist;
wenn der Absolutwert der Abweichungsrate des Wertes der Verkehrsinformationen des zweiten Datenverkehrs relativ zu der zweiten Schwelle größer als eine zweite zuvor bestimmte Abweichungsrate ist, die Verarbeitungseinheit (1004) ferner konfiguriert ist, um zu bestimmen, dass ein Identifikationsfehler in dem zweiten Datenverkehr vorliegt, der dem zu überwachenden Protokollart zugehörig ist; und
wenn die Verarbeitungseinheit (1004) bestimmt, dass ein Identifikationsfehler in dem zweiten Datenverkehr vorliegt, der der zu überwachenden Protokollart zugehörig ist, die Verarbeitungseinheit ferner konfiguriert ist, um eine Identifikationsfehlerschutzaktion auszulösen.

12. Überwachungsvorrichtung nach Anspruch 10 oder 11, wobei
wenn der Absolutwert der Abweichungsrate des Wertes der Verkehrsinformationen des zweiten Datenverkehrs relativ zu der zweiten Schwelle kleiner als oder gleich der zweiten zuvor bestimmten Abweichungsrate ist, die Verarbeitungseinheit (1004) ferner konfiguriert ist, um zu bestimmen, dass kein Identifikationsfehler in dem zweiten Datenverkehr vorliegt, der der zu überwachenden Protokollart zugehörig ist; und
wenn die Verarbeitungseinheit (1004) bestimmt, dass kein Identifikationsfehler in dem zweiten Datenverkehr vorliegt, der der zu überwachenden Protokollart zugehörig ist, die Verarbeitungseinheit (1004) ferner konfiguriert ist, um die zweite Schwelle auf einen Durchschnitt des Wertes der Verkehrsinformationen des zweiten Datenverkehrs und des Wertes der Verkehrsinformationen des ersten Datenverkehrs zu aktualisieren.

13. Überwachungsvorrichtung nach Anspruch 9, wobei
die Verkehrsinformationen des ersten Datenverkehrs ferner eine erste Benutzeranzahl umfassen und die erste Benutzeranzahl verwendet wird, um eine Anzahl von Benutzern anzugeben, die dem ersten Datenverkehr zugehörig sind; und
der Absolutwert der Abweichungsrate des Wertes der Verkehrsinformationen des ersten Datenverkehrs relativ zu der ersten Schwelle speziell eine Summe eines Wertes, der durch Multiplizieren eines Absolutwertes einer Abweichungsrate eines Wertes des ersten Datenvolumens relativ zu einer Schwelle des ersten Datenvolumens mit einer ersten Gewichtung erhalten wird, und eines Wertes ist, der durch Multiplizieren eines Absolutwertes einer Abweichungsrate eines Wertes der ersten Benutzeranzahl relativ zu einer Schwelle der ersten Benutzeranzahl mit einer zweiten Gewichtung erhalten wird, wobei die erste Schwelle die Schwelle des ersten Datenvolumens und die Schwelle der ersten Benutzeranzahl umfasst und eine Summe der ersten Gewichtung und der zweiten Gewichtung 1 ist.

## Revendications

1. Procédé de surveillance de trafic de données, le procédé comprenant :
la collecte (S102), par un appareil de surveillance en fonction d'un type de protocole à surveiller, d'un trafic de données associé au type de protocole à surveiller dans le trafic de données provenant d'un équipement utilisateur ou d'un réseau de protocole Internet, IP, pour obtenir un premier trafic de données, le type de protocole à surveiller étant utilisé pour indiquer une application associée au trafic de données ;
l'obtention (S104), par l'appareil de surveillance, d'informations de trafic du premier trafic de données, les informations de trafic du premier trafic de données comprenant un premier volume de données, et le premier volume de données étant utilisé pour indiquer une somme des longueurs de tous les paquets dans le premier trafic de données ;
la détermination (S106), par l'appareil de surveillance en fonction des informations de trafic du premier trafic de données, du fait de savoir s'il existe une erreur d'identification dans le premier trafic de données associé au type de protocole à surveiller ; et
lorsque l'appareil de surveillance détermine qu'il existe une erreur d'identification dans le premier trafic de données associé au type de protocole à surveiller, le déclenchement (S108), par l'appareil de surveillance, d'une action de protection contre les erreurs d'identification, la détermination (S106), par l'appareil de surveillance en fonction des informations de trafic du premier trafic de données, du fait de savoir s'il existe une erreur d'identification dans le premier trafic de données associé au type de protocole à surveiller comprenant :
lorsqu'une valeur absolue d'un taux d'écart d'une valeur des informations de trafic du premier trafic de données par rapport à un premier seuil est supérieure à un premier taux d'écart prédéterminé, la détermination, par l'appareil de surveillance, du fait qu'il existe une erreur d'identification dans le premier trafic de données associé au type de protocole à surveiller, le premier seuil étant une valeur prédéfinie.

2. Procédé selon la revendication 1, la collecte (S102), par un appareil de surveillance en fonction d'un type de protocole à surveiller, d'un trafic de données associé au type de protocole à surveiller dans un trafic de données en provenance d'un équipement utilisateur ou d'un réseau de protocole Internet, IP, pour obtenir un premier trafic de données comprenant : la collecte, par l'appareil de surveillance en fonction du type de protocole à surveiller, du trafic de données qui est associé au type de protocole à surveiller dans le trafic de données en provenance de l'équipement utilisateur ou du réseau IP et qui correspond à un premier moment prédéterminé, pour obtenir le premier trafic de données ; et
le procédé comprenant en outre :
la collecte, par l'appareil de surveillance en fonction du type de protocole à surveiller, d'un trafic de données qui est associé au type de protocole à surveiller dans le trafic de données en provenance de l'équipement utilisateur ou du réseau IP et qui correspond à un second moment prédéterminé, pour obtenir un second trafic de données, le premier moment prédéterminé et le second moment prédéterminé étant un même moment à des dates différentes ;
l'obtention, par l'appareil de surveillance, d'informations de trafic du second trafic de données, les informations de trafic du second trafic de données comprenant un second volume de données, et le second volume de données étant utilisé pour indiquer une somme des longueurs de tous les paquets dans le second trafic de données ;
la détermination, par l'appareil de surveillance en fonction d'une valeur absolue d'un taux d'écart d'une valeur des informations de trafic du second trafic de données par rapport à un second seuil, du fait de savoir s'il existe une erreur d'identification dans le second trafic de données associé au type de protocole surveillé, le second seuil étant la valeur des informations de trafic du premier trafic de données ;
lorsque la valeur absolue du taux d'écart de la valeur des informations de trafic du second trafic de données par rapport au second seuil est supérieure à un second taux d'écart prédéterminé, la détermination, par l'appareil de surveillance, du fait qu'il existe une erreur d'identification dans le second trafic de données associé au type de protocole à surveiller ; et
lorsque l'appareil de surveillance détermine qu'il existe une erreur d'identification dans le second trafic de données associé au type de protocole à surveiller, le déclenchement, par l'appareil de surveillance, d'une action de protection contre les erreurs d'identification.

3. Procédé selon la revendication 1, la collecte (S102), par un appareil de surveillance en fonction d'un type de protocole à surveiller, d'un trafic de données associé au type de protocole à surveiller dans un trafic de données en provenance d'un équipement utilisateur ou d'un réseau de protocole Internet, IP, pour obtenir un premier trafic de données comprenant : la collecte, par l'appareil de surveillance en fonction du type de protocole à surveiller, d'un trafic de données qui est associé au type de protocole à surveiller dans le trafic de données en provenance de l'équipement utilisateur ou du réseau IP et qui correspond à un premier intervalle de temps prédéterminé, pour obtenir le premier trafic de données ; et
le procédé comprenant en outre :
la collecte, par l'appareil de surveillance en fonction du type de protocole à surveiller, d'un trafic de données qui est associé au type de protocole à surveiller dans le trafic de données en provenance de l'équipement utilisateur ou du réseau IP et qui correspond à un second intervalle de temps prédéterminé, pour obtenir un second trafic de données, un moment de début du premier intervalle de temps prédéterminé et un moment de début du second intervalle de temps prédéterminé étant un même moment à des dates différentes, et un moment de fin du premier intervalle de temps prédéterminé et un moment de fin du second intervalle de temps prédéterminé étant un même moment à des dates différentes ;
l'obtention, par l'appareil de surveillance, d'informations de trafic du second trafic de données, les informations de trafic du second trafic de données comprenant un second volume de données, et le second volume de données étant utilisé pour indiquer une somme des longueurs de tous les paquets dans le second trafic de données ;
la détermination, par l'appareil de surveillance en fonction d'une valeur absolue d'un taux d'écart d'une valeur des informations de trafic du second trafic de données par rapport à un second seuil, du fait de savoir s'il existe une erreur d'identification dans le second trafic de données associé au type de protocole surveillé, le second seuil étant la valeur des informations de trafic du premier trafic de données ;
lorsque la valeur absolue du taux d'écart de la valeur des informations de trafic du second trafic de données par rapport au second seuil est supérieure à un second taux d'écart prédéterminé, la détermination, par l'appareil de surveillance, du fait qu'il existe une erreur d'identification dans le second trafic de données associé au type de protocole à surveiller ; et
lorsque l'appareil de surveillance détermine qu'il existe une erreur d'identification dans le second trafic de données associé au type de protocole à surveiller, le déclenchement, par l'appareil de surveillance, d'une action de protection contre les erreurs d'identification.

4. Procédé selon la revendication 2 ou 3, le procédé comprenant en outre :
lorsque la valeur absolue du taux d'écart de la valeur des informations de trafic du second trafic de données par rapport au second seuil est inférieure ou égale au second taux d'écart prédéterminé, la détermination, par l'appareil de surveillance, du fait qu'il n'existe aucune erreur d'identification dans le second trafic de données associé au type de protocole à surveiller ; et
lorsque l'appareil de surveillance détermine qu'il n'existe aucune erreur d'identification dans le second trafic de données associé au type de protocole à surveiller, la mise à jour, par l'appareil de surveillance, du second seuil à une moyenne de la valeur des informations de trafic du second trafic de données et de la valeur des informations de trafic du premier trafic de données.

5. Procédé selon la revendication 1,
les informations de trafic du premier trafic de données comprenant en outre une première quantité d'utilisateurs, et la première quantité d'utilisateurs étant utilisée pour indiquer une quantité d'utilisateurs associée au premier trafic de données ; et
la valeur absolue du taux d'écart de la valeur des informations de trafic du premier trafic de données par rapport au premier seuil étant spécifiquement une somme d'une valeur obtenue en multipliant une valeur absolue d'un taux d'écart d'une valeur du premier volume de données par rapport à un premier seuil de volume de données par un premier poids et d'une valeur obtenue en multipliant une valeur absolue d'un taux d'écart d'une valeur de la première quantité d'utilisateurs par rapport à un premier seuil de quantité d'utilisateurs par un second poids, le premier seuil comprenant le premier seuil de volume de données et le premier seuil de quantité d'utilisateurs, et une somme du premier poids et du second poids étant 1.

6. Procédé selon la revendication 2 ou la revendication 3,
les informations de trafic du premier trafic de données comprenant en outre une première quantité d'utilisateurs, et la première quantité d'utilisateurs étant utilisée pour indiquer une quantité d'utilisateurs associée au premier trafic de données ;
les informations de trafic du second trafic de données comprenant en outre une seconde quantité d'utilisateurs, et la seconde quantité d'utilisateurs étant utilisée pour indiquer une quantité d'utilisateurs associée au second trafic de données ; et
la valeur absolue du taux d'écart de la valeur des informations de trafic du second trafic de données par rapport au second seuil étant spécifiquement une somme d'une valeur obtenue en multipliant une valeur absolue d'un taux d'écart d'une valeur du second volume de données par rapport à un second seuil de volume de données par un premier poids et d'une valeur obtenue en multipliant une valeur absolue d'un taux d'écart d'une valeur de la seconde quantité d'utilisateurs par rapport à un second seuil de quantité d'utilisateurs par un second poids, le second seuil comprenant le second seuil de volume de données et le second seuil de quantité d'utilisateurs, le second seuil de volume de données étant une valeur du premier volume de données du premier trafic de données, le second seuil de quantité d'utilisateurs étant une valeur de la première quantité d'utilisateurs du premier trafic de données, et une somme du premier poids et du second poids étant 1.

7. Procédé selon la revendication 4,
les informations de trafic du premier trafic de données comprenant en outre une première quantité d'utilisateurs, et la première quantité d'utilisateurs étant utilisée pour indiquer une quantité d'utilisateurs associée au premier trafic de données ;
les informations de trafic du second trafic de données comprenant en outre une seconde quantité d'utilisateurs, et la seconde quantité d'utilisateurs étant utilisée pour indiquer une quantité d'utilisateurs associée au second trafic de données ;
la valeur absolue du taux d'écart de la valeur des informations de trafic du second trafic de données par rapport au second seuil étant spécifiquement une somme d'une valeur obtenue en multipliant une valeur absolue d'un taux d'écart d'une valeur du second volume de données par rapport à un second seuil de volume de données par un premier poids et d'une valeur obtenue en multipliant une valeur absolue d'un taux d'écart d'une valeur de la seconde quantité d'utilisateurs par rapport à un second seuil de quantité d'utilisateurs par un second poids, le second seuil comprenant le second seuil de volume de données et le second seuil de quantité d'utilisateurs, le second seuil de volume de données étant une valeur du premier volume de données du premier trafic de données, le second seuil de quantité d'utilisateurs étant une valeur de la première quantité d'utilisateurs du premier trafic de données, et une somme du premier poids et du second poids étant 1 ; et
la mise à jour, par l'appareil de surveillance, du second seuil à une moyenne de la valeur des informations de trafic du second trafic de données et de la valeur des informations de trafic du premier trafic de données comprenant spécifiquement : la mise à jour, par l'appareil de surveillance, du second seuil de volume de données à une moyenne de la valeur du second volume de données du second trafic de données et de la valeur du premier volume de données du premier trafic de données, et la mise à jour, par l'appareil de surveillance, du second seuil de quantité d'utilisateurs à une moyenne de la valeur de la seconde quantité d'utilisateurs du second trafic de données et de la valeur de la première quantité d'utilisateurs du premier trafic de données.

8. Procédé selon l'une quelconque des revendications 1 à 7,
l'action de protection contre les erreurs d'identification comprenant au moins l'une des actions suivantes : l'émission d'une alarme, l'autorisation du trafic, la limitation du trafic et le blocage du trafic.

9. Appareil de surveillance permettant la surveillance de trafic de données, l'appareil de surveillance comprenant :
une unité de collecte (1002), configurée pour collecter, en fonction d'un type de protocole à surveiller, un trafic de données associé au type de protocole à surveiller dans un trafic de données provenant d'un équipement utilisateur ou d'un réseau de protocole Internet, IP, pour obtenir un premier trafic de données, le type de protocole à surveiller étant utilisé pour indiquer une application associée au trafic de données ; et
une unité de traitement (1004), configurée pour obtenir des informations de trafic du premier trafic de données, les informations de trafic du premier trafic de données comprenant un premier volume de données, et le premier volume de données étant utilisé pour indiquer une somme des longueurs de tous les paquets dans le premier trafic de données,
l'unité de traitement (1004) étant en outre configurée pour déterminer, en fonction des informations de trafic du premier trafic de données, s'il existe une erreur d'identification dans le premier trafic de données associé au type de protocole à surveiller ; et
lorsque l'unité de traitement (1004) détermine qu'il existe une erreur d'identification dans le premier trafic de données associé au type de protocole à surveiller, l'unité de traitement (1004) étant en outre configurée pour déclencher une action de protection contre les erreurs d'identification, lors de la détermination, en fonction des informations de trafic du premier trafic de données, du fait de savoir s'il existe une erreur d'identification dans le premier trafic de données associé au type de protocole à surveiller, l'unité de traitement (1004) étant en outre spécifiquement configurée pour :
lorsqu'une valeur absolue d'un taux d'écart d'une valeur des informations de trafic du premier trafic de données par rapport à un premier seuil est supérieure à un premier taux d'écart prédéterminé, déterminer qu'il existe une erreur d'identification dans le premier trafic de données associé au type de protocole à surveiller, le premier seuil étant une valeur prédéfinie.

10. Appareil de surveillance selon la revendication 9, lors de la collecte, en fonction du type de protocole à surveiller, du trafic de données associé au type de protocole à surveiller dans le trafic de données en provenance de l'équipement utilisateur ou du réseau de protocole Internet, IP, pour obtenir le premier trafic de données, l'unité de collecte (1004) étant spécifiquement configurée pour collecter, en fonction du type de protocole à surveiller, un trafic de données qui est associé au type de protocole à surveiller dans le trafic de données en provenance de l'équipement utilisateur ou du réseau IP et qui correspond à un premier moment prédéterminé, pour obtenir le premier trafic de données ;
l'unité de collecte (1004) étant en outre configurée pour collecter, en fonction du type de protocole à surveiller, le trafic de données qui est associé au type de protocole à surveiller dans le trafic de données en provenance de l'équipement utilisateur ou du réseau IP et qui correspond à un second moment prédéterminé, pour obtenir un second trafic de données, le premier moment prédéterminé et le second moment prédéterminé étant un même moment à des dates différentes ;
l'unité de traitement (1004) étant en outre configurée pour obtenir des informations de trafic du second trafic de données, les informations de trafic du second trafic de données comprenant un second volume de données, et le second volume de données étant utilisé pour indiquer une somme des longueurs de tous les paquets dans le second trafic de données ;
l'unité de traitement (1004) étant en outre configurée pour déterminer, en fonction d'une valeur absolue d'un taux d'écart d'une valeur des informations de trafic du second trafic de données par rapport à un second seuil, s'il existe une erreur d'identification dans le second trafic de données associé au type de protocole à surveiller, le second seuil étant la valeur des informations de trafic du premier trafic de données ;
lorsque la valeur absolue du taux d'écart de la valeur des informations de trafic du second trafic de données par rapport au second seuil est supérieure à un second taux d'écart prédéterminé, l'unité de traitement (1004) étant en outre configurée pour déterminer qu'il existe une erreur d'identification dans le second trafic de données associé au type de protocole à surveiller ; et
lorsque l'unité de traitement (1004) détermine qu'il existe une erreur d'identification dans le second trafic de données associé au type de protocole à surveiller, l'unité de traitement (1004) étant en outre configurée pour déclencher une action de protection contre les erreurs d'identification.

11. Appareil de surveillance selon la revendication 9, lors de la collecte, en fonction du type de protocole à surveiller, du trafic de données associé au type de protocole à surveiller dans le trafic de données en provenance de l'équipement utilisateur ou du réseau de protocole Internet, IP, pour obtenir le premier trafic de données, l'unité de collecte (1004) étant spécifiquement configurée pour collecter, en fonction du type de protocole à surveiller, un trafic de données qui est associé au type de protocole à surveiller dans le trafic de données en provenance de l'équipement utilisateur ou du réseau IP et qui correspond à un premier intervalle de temps prédéterminé, pour obtenir le premier trafic de données ;
l'unité de collecte (1004) étant en outre configurée pour collecter, en fonction du type de protocole à surveiller, le trafic de données qui est associé au type de protocole à surveiller dans le trafic de données en provenance de l'équipement utilisateur ou du réseau IP et qui correspond à un second intervalle de temps prédéterminé, pour obtenir un second trafic de données, un moment de début du premier intervalle de temps prédéterminé et un moment de début du second intervalle de temps prédéterminé étant un même moment à des dates différentes, et un moment de fin du un premier intervalle de temps prédéterminé et un moment de fin du second intervalle de temps prédéterminé étant un même moment à des dates différentes ;
l'unité de traitement (1004) étant en outre configurée pour obtenir des informations de trafic du second trafic de données, les informations de trafic du second trafic de données comprenant un second volume de données, et le second volume de données étant utilisé pour indiquer une somme des longueurs de tous les paquets dans le second trafic de données ;
l'unité de traitement (1004) étant en outre configurée pour déterminer, en fonction d'une valeur absolue d'un taux d'écart d'une valeur des informations de trafic du second trafic de données par rapport à un second seuil, s'il existe une erreur d'identification dans le second trafic de données associé au type de protocole à surveiller, le second seuil étant la valeur des informations de trafic du premier trafic de données ;
lorsque la valeur absolue du taux d'écart de la valeur des informations de trafic du second trafic de données par rapport au second seuil est supérieure à un second taux d'écart prédéterminé, l'unité de traitement (1004) étant en outre configurée pour déterminer qu'il existe une erreur d'identification dans le second trafic de données associé au type de protocole à surveiller ; et
lorsque l'unité de traitement (1004) détermine qu'il existe une erreur d'identification dans le second trafic de données associé au type de protocole à surveiller, l'unité de traitement étant en outre configurée pour déclencher une action de protection contre les erreurs d'identification.

12. Appareil de surveillance selon la revendication 10 ou 11,
lorsque la valeur absolue du taux d'écart de la valeur des informations de trafic du second trafic de données par rapport au second seuil est inférieure ou égale au second taux d'écart prédéterminé, l'unité de traitement (1004) étant en outre configurée pour déterminer qu'il n'existe aucune erreur d'identification dans le second trafic de données associé au type de protocole à surveiller ; et
lorsque l'unité de traitement (1004) détermine qu'il n'existe aucune erreur d'identification dans le second trafic de données associé au type de protocole à surveiller, l'unité de traitement (1004) étant en outre configurée pour mettre à jour le second seuil à une moyenne de la valeur des informations de trafic du second trafic de données et de la valeur des informations de trafic du premier trafic de données.

13. Appareil de surveillance selon la revendication 9,
les informations de trafic du premier trafic de données comprenant en outre une première quantité d'utilisateurs, et la première quantité d'utilisateurs étant utilisée pour indiquer une quantité d'utilisateurs associée au premier trafic de données ; et
la valeur absolue du taux d'écart de la valeur des informations de trafic du premier trafic de données par rapport au premier seuil étant spécifiquement une somme d'une valeur obtenue en multipliant une valeur absolue d'un taux d'écart d'une valeur du premier volume de données par rapport à un premier seuil de volume de données par un premier poids et d'une valeur obtenue en multipliant une valeur absolue d'un taux d'écart d'une valeur de la première quantité d'utilisateurs par rapport à un premier seuil de quantité d'utilisateurs par un second poids, le premier seuil comprenant le premier seuil de volume de données et le premier seuil de quantité d'utilisateurs, et une somme du premier poids et du second poids étant 1.
